Europäisches Patentamt

European Patent Office

Office européen des brevets

(11) Numéro de publication: **0 323 302 B1**

## FASCICULE DE BREVET EUROPEEN

(45) Date de publication de fascicule du brevet: **17.06.92**  (51) Int. Cl.⁵: **G06F 15/72**

(21) Numéro de dépôt: **88403179.0**

(22) Date de dépôt: **14.12.88**

(54) **Procédé de visualisation en trois dimensions d'objets codés numériquement sous forme arborescente.**

(30) Priorité: **24.12.87 FR 8718151**

(43) Date de publication de la demande:
**05.07.89 Bulletin 89/27**

(45) Mention de la délivrance du brevet:
**17.06.92 Bulletin 92/25**

(84) Etats contractants désignés:
**DE ES GB IT NL**

(56) Documents cités:
**EP-A- 0 152 741**
**WO-A-80/02210**

**MESURES, vol. 50, no. 11, 23 septembre 1985, pages 113-117, Paris, FR; Recherche et développement informatique industrielle: "Aller plus vite, c'est prendre RISC"**

**WESCON/85 CONFERENCE RECORD, San Francisco, CA, 19-22 novembre 1985, vol. 29, pages 5/3,1-9, Electronic Conventions Management, New York, US; C. CARINALLI: "An architectural solution for high performance graphics"**

(73) Titulaire: **GENERAL ELECTRIC CGR S.A.**
**13, Square Max-Hymans**
**F-75015 Paris(FR)**

(72) Inventeur: **Prévost, Guy**
**Cabinet BALLOT-SCHMIT 84 avenue Kléber**
**F-75116 Paris(FR)**
Inventeur: **Milon, Daniel**
**Cabinet BALLOT-SCHMIT 84 avenue Kléber**
**F-75116 Paris(FR)**
Inventeur: **Lis, Olivier**
**Cabinet BALLOT-SCHMIT 84 avenue Kléber**
**F-75116 Paris(FR)**
Inventeur: **Delcroix, Michel**
**Cabinet BALLOT-SCHMIT 84 avenue Kléber**
**F-75116 Paris(FR)**
Inventeur: **Edwards, Bruce**
**Cabinet BALLOT-SCHMIT 84 avenue Kléber**
**F-75116 Paris(FR)**
Inventeur: **Meagher Donald**
**Cabinet BALLOT-SCHMIT 84 avenue Kléber**
**F-75116 Paris(FR)**

(74) Mandataire: **Schmit, Christian Norbert Marie et al**
**Cabinet Ballot-Schmit 7, rue Le Sueur**
**F-75116 Paris(FR)**

COMPUTER GRAPHICS AND IMAGE PROCESSING, vol. 19, no.2, juin 1982, pages 129-147, Academic Press, Inc., New York, US; D. MEAGHER: "Geometric modeling using octree encoding"

COMPUTERS AND GRAPHICS, vol. 9, no. 2, 1985, pages 107-116, Pergamon Press Ltd, Elmsford, New York, US; F. HERBERT: "Solid modeling for architecural design using oct-paths"

PROCEEDINGS OF THE IEEE, vol. 71, no. 3, mars 1983, pages 420-431, IEEE, New York, US; J.K. UDUPA: "Display of 3D information in discrete 3D scenes produced by computerized tomography"

**Description**

La présente invention a pour objet un procédé de visualisation en trois dimensions d'objets codés numériquement sous forme arborescente et un dispositif de mise en oeuvre de ce procédé.

Le codage numérique d'images sous forme arborescente, forme généralement appelée "octree", est bien connu par de nombreuses publications, comme par exemple l'article de D.J.R. MEAGHER : "High Speed Display of 3D Medical Images using Octree Encoding" paru dans "Rensselaer Polytechnic Institute Technical Report" de septembre 1981, ou bien l'article du même auteur "Geometric Modeling Using Octree Encoding", paru dans la revue Computer Graphics and Image Processing N° 19 de juin 1982, pages 129 à 147.

Par ailleurs, on connaît d'après le Brevet US n° 4 694 404 ou la demande de brevet européen N° 0 152 741 un procédé de visualisation en trois dimensions (3D) partant d'images d'un objet codées sous forme d'octree. Ce procédé consiste essentiellement à former, à partir des informations octree organisées en un univers objet, la projection dans un plan-cible, parallèle à l'écran d'observation, de cet objet.

Ce procédé connu fournit des images 3D de bonne qualité, mais fait appel pour sa mise en oeuvre à un matériel complexe et coûteux.

La présente invention a pour objet un procédé de visualisation en trois dimensions d'objets codés sous forme d'octree qui soit très rapide aussi bien pour des vues extérieures, le cas échéant avec ombrages, que pour des vues selon une coupe quelconque, et qui fasse appel pour sa mise en oeuvre à un dispositif peu complexe et peu onéreux.

L'invention a donc pour objet un procédé dé visualisation en trois dimensions d'objets codés numériquement sous forme d'octree, l'octree étant emmagasinée dans une mémoire d'octree selon une structure arborescente obtenue, à chaque niveau, par division par deux selon chaque axe de coordonnées Ox, Oy, Oz, des dimensions de l'univers objet ou de ses sous-univers, l'univers objet étant un cube renfermant toute l'information à représenter, caractérisé par le fait qu'à partir de l'univers objet on ne génère que la partie utile d'un autre octree cible dans un univers cible, l'univers cible étant un hexaèdre dont les axes de coordonnées Ox', Oy' forment un plan parallèle à un écran de visualisation.

La partie utile dudit autre octree pouvant servir soit à représenter la partie visible d'un objet (suppression des parties cachées), soit à supprimer tout ce qui est du "mauvais" côté d'un plan de coupe, soit à ne sélectionner que les obels se trouvant sur le plan de coupe, soit à tout sélectionner (mode transparent).

La présente invention sera mieux comprise à la lecture de la description d'un mode de réalisation, pris comme exemple non limitatif et illustré par le dessin annexé, sur lequel :
- la figure 1 est une vue schématique en perspective d'un univers objet;
- la figure 2 est un diagramme simplifié expliquant la formation de la structure "octree";
- la figure 3 est un diagramme montrant partiellement l'organisation des données dans la mémoire d'octree dans le cas d'un offset court, et long dans la figure 3A;
- la figure 4 est un diagramme, en deux dimensions, expliquant l'échantillonnage d'un "overlay";
- les figures 5 et 6 sont des diagrammes expliquant l'obtention et la numérotation des "overlays fils";
- la figure 7 est un diagramme expliquant l'obtention de l'univers cible, conformément à l'invention;
- les figures 8 et 9 sont respectivement un diagramme expliquant le test permettant de déterminer les valeurs des éléments d'image vus de la cible, et un diagramme expliquant le choix du nouvel overlay, conformément à l'invention ;
- la figure 10 est un diagramme expliquant la détermination des coupes, conformément à l'invention ;
- la figure 11 est un bloc diagramme simplifié d'un dispositif pour mettre eu oeuvre la méthode de l'invention ;
- les figures 12 et 15 à 29 sont des schémas de parties du dispositif de la figure 11, et
- les figures 13, 14 et 30 sont des diagrammes expliquant le fonctionnement de certains circuits du dispositif de la figure 11.

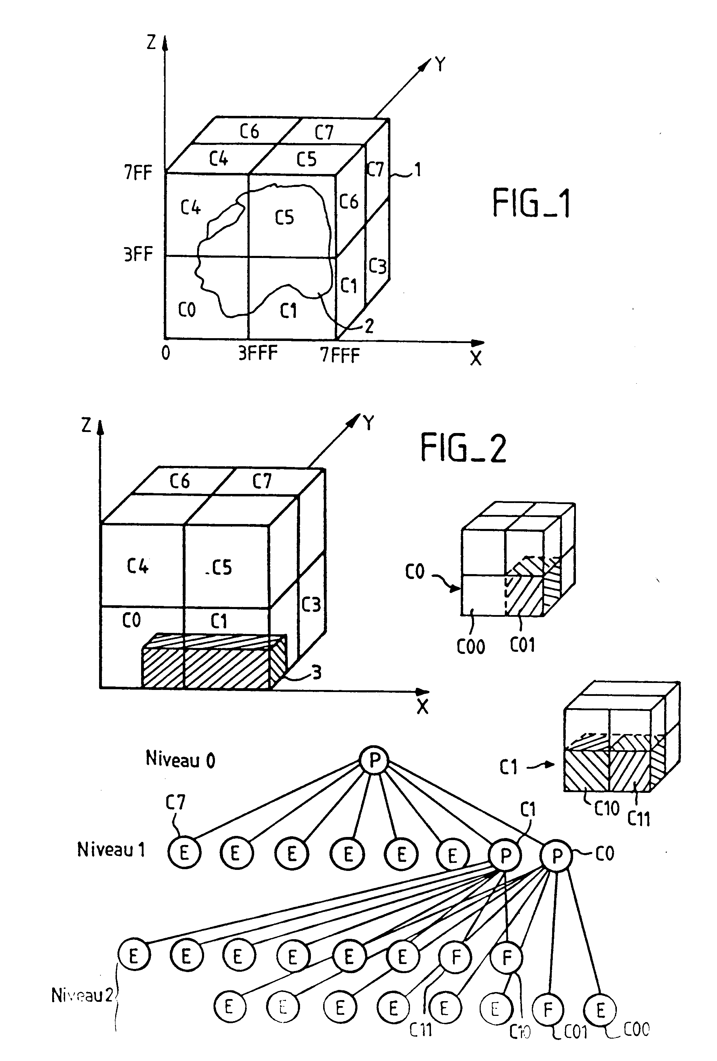

Avant d'expliquer en détail la présente invention, on va rappeler brièvement, en référence aux figures 1 à 6, la façon d'arranger en mémoire les données correspondant à des objets en trois dimensions, données provenant par exemple de coupes parallèles successives réalisées par un "scanner", et d'utiliser ces données.

On a représenté sur la figure 1 un cube 1 que l'on appelle "univers objet", et qui renferme toute l'information à représenter, c'est-à-dire que l'objet 2 (en 3D) à représenter y est entièrement inscrit. Ce cube 1 est orienté de telle façon que chacune de ses arêtes soit parallèle à l'un des trois axes d'un système de coordonnées rectangulaires Ox, Oy, Oz, l'un des coins du cube étant disposé à l'origine O du système de coordonnées. Pour des raisons exposées plus loin, les dimensions du cube 1 sont égales à

EP 0 323 302 B1

7FFF en notation hexadécimale, mais ne sont pas égales aux dimensions réelles de l'objet à représenter.

Pour pouvoir échantillonner l'objet contenu dans le cube 1, on procède à une "dichotomie hiérarchique". Pour cela, on partage le cube 1 en huit cubes égaux, notés C0 à C7, ce, en divisant le cube 1 en deux parallèlement à chacun des trois plans formant le trièdre (Ox, Oy, Oz). Chacun des cubes C0 à C7 a des arêtes de longueur égale à 3FFF, en notation hexadécimale.

Chacun des cubes C0 à C7 sera divisé similairement en huit, et ainsi de suite.

On obtient alors une "hiérarchie" à plusieurs niveaux, au sommet de laquelle (niveau zéro par définition) se situe le cube 1. Au niveau 1, on a les cubes C0 à C7, et ainsi de suite. On expliquera ci-dessous à quel niveau s'arrête cette hiérarchie, pour atteindre la résolution désirée.

Le cube 1 est dit "père" des cubes C0 à C7 qui sont appelés "obels" (contraction de "object element"). Chacun des cubes C0 à C7 est le père de huit cubes du niveau suivant (niveau 2), et ainsi de suite.

A chaque niveau, la numérotation des huit cubes ou obels fils issus d'un même père suit une règle fixe.

Ainsi, au niveau 1 comme représenté en figure 2, les coordonnées respectives, en notation hexadécimale, des centres des obels fils sont les suivantes (en Ox, Oy, Oz) :

C0 :  1FFF, 1FFF, 1FFF
C1 :  5FFF, 1FFF, 1FFF
C2 :  1FFF, 5FFF, 1FFF
C3 :  5FFF, 5FFF, 1FFF
C4 :  1FFF, 1FFF, 5FFF
C5 :  5FFF, 1FFF, 5FFF
C6 :  1FFF, 5FFF, 5FFF
C7 :  5FFF, 5FFF, 5FFF

Examinons maintenant comment s'écrivent, en notation hexadécimale, puis en notation binaire, les coordonnées de points contenus dans les cubes. Pour simplifier, on prendra les coordonnées, selon Ox des centres des cubes C0 et C1. A partir de là, il sera évident de généraliser aux autres axes de coordonnées et à n'importe quel niveau.

Pour le centre de C0, la coordonnée $x_0$ est :

| | | | | | | |
|---|---|---|---|---|---|---|
| ou | $x_0 =$ | 1 | F | F | F | (hexadécimal) |
| | $X_0 =$ | 001 | 1111 | 1111 | 1111 | (binaire) |

Pour le centre de C1, la coordonnée x1 est :

| | | | | | | |
|---|---|---|---|---|---|---|
| ou | x1 = | 5 | F | F | F | (hexadécimal) |
| | x1 = | 101 | 1111 | 1111 | 1111 | (binaire) |

en notation binaire, les bits utilisés ont, de droite à gauche, les poids respectifs 0 à 14. On voit qu'il suffit d'examiner les bits de poids 14 pour déterminer si les points en question sont situés dans le cube de gauche (C0) : bit = 0 ou dans celui de droite (C1) : bit = 1. Il en est de même pour n'importe quel point contenu dans ces cubes : la coordonnée selon Ox de n'importe quel point contenu dans C0 est inférieure à 3FFF, c'est-à-dire que son bit de poids 14, en notation binaire, est toujours nul, tandis que la coordonnée selon Ox de n'importe quel point contenu dans C1 est comprise entre 3FFF et 7FFF, c'est-à-dire qu'en notation binaire son bit de poids 14 est toujours égal à 1.

Le découpage de l'univers objet 1 (univers initial) ainsi réalisé forme une arborescence que l'on appellera "octree" (contraction de "octant tree"). Chaque "noeud" de cette arborescence correspond à un cube. Un noeud de l'arborescence octree supporte deux types d'information : une valeur de l'état du noeud et des propriétés diverses.

L'état d'un noeud peut avoir trois valeurs : E, P ou F :

E (pour "empty") représente un noeud vide pour signifier que le volume du cube correspondant ne contient pas de propriété attachée. On ne découpe plus le cube correspondant qui n'a donc pas de fils. C'est le cas lorsqu'un cube est entièrement a l'extérieur de l'objet à représenter (il ne referme que l'air environnant).

P (pour "partial") représente un noeud dont une partie des descendants possèdent des propriétés.

4

EP 0 323 302 B1

C'est le cas pour un cube dont une partie se situe dans l'objet à représenter et une partie à l'extérieur de cet objet.

F (pour "full") représente un noeud qui possède une propriété uniforme, mais qui n'a pas de descendant, et qui est donc une "feuille" de l'arborescence octree.

Les propriétés d'un noeud représentent l'information caractéristique de l'obel correspondant. Dans le cas d'un obel feuille, cette information peut par exemple être une densité de matière mesurée au scanner. Dans le cas d'un obel partiellement rempli (noeud P), cette information peut être une condensation de l'information des obels fils (moyenne des densités des fils ou bien minimum et maximum des densités des fils).

Lorsque la seule propriété est la présence ou l'absence de l'objet dans l'obel considéré, le codage de la valeur de l'obel par F, P ou E est suffisante, et aucun codage de propriété n'est nécessaire. On dit alors que l'objet décrit est binaire.

On a représenté en figure 2 un exemple simplifié d'arborescence octree. On a supposé que l'objet 3 à représenter est contenu dans les seuls cubes C0 et C1, que c'est un parallélépipède rectangle dont les arêtes sont parallèles aux axes Ox, Oy, Oz respectivement. L'objet 3 s'étend, selon Ox de 1FFF à 7FFF, selon Oy de O à 1FFF et selon Oz de O à 1FFF. On suppose que cet objet est binaire.

Au niveau O, le noeud correspondant au cube 1 est "P". Au niveau 1, parmi les huit fils du cube 1 seuls les deux premiers sont "P", les autres sont "E" (on numérote - C0 à C7 - de droite à gauche, pour chaque niveau). Donc seuls les cubes C0 et C1 auront des fils, dans le niveau 2. Les cubes C0 et C1 ont pour fils les cubes C00 à C07 et C10 à C17 respectivement. Parmi les fils de C0, C01 est "F", et tous les autres sont "E", et parmi les fils de C1, C10 et C11 sont "F" et tous les autres sont "E", comme on le voit d'après les schémas de C0 et C1 dessinés à part sur la figure 2. Il n'y a plus besoin de descendre dans la hiérarchie après le niveau 2, puisqu'il ne comporte plus de noeuds "P".

Le processus d'obtention d'un octree étant expliqué, on va maintenant expliquer comment on code les données et comment on les range en mémoire (mémoire d'octree) pour les exploiter le plus facilement possible.

L'état d'un noeud pouvant prendre trois valeurs, ces valeurs sont codées sur deux bits. On codera par exemple 00 pour E, 01 pour P, 10 pour F. Il est possible d'utiliser la valeur restante 11 = F1 pour représenter un deuxième objet dans la même structure de données.

On définit comme paquet de noeuds un ensemble de huit noeuds partageant le même père. Un paquet est donc codé sur 16 bits formés par la concaténation des valeurs des huit noeuds, dans l'ordre de leurs numéros d'obels, le numéro 0 (zéro) étant du côté des poids faibles.

On définit comme bloc de paquets de noeuds un ensemble de paquets de noeuds qui sont les fils des noeuds d'un même paquet de noeuds, appelé paquet père du bloc. Un bloc peut donc contenir de 1 à 8 paquets de noeuds (c'est-à-dire de 8 à 64 noeuds) selon le nombre de noeuds partiels ("P") du paquet de noeuds père.

Un bloc de paquets de noeuds est stocké dans une mémoire à des adresses successives de mots de 32 bits. L'adresse du premier paquet de noeuds d'un bloc est appelée adresse du bloc. Chaque mot de 32 bits contient dans 16 bits, par exemple les 16 bits de poids faibles, les huit valeurs des noeuds du paquet de noeuds correspondant, et dans les 16 autres bits (ceux de poids forts pour l'exemple précité) l'offset d'adresse.

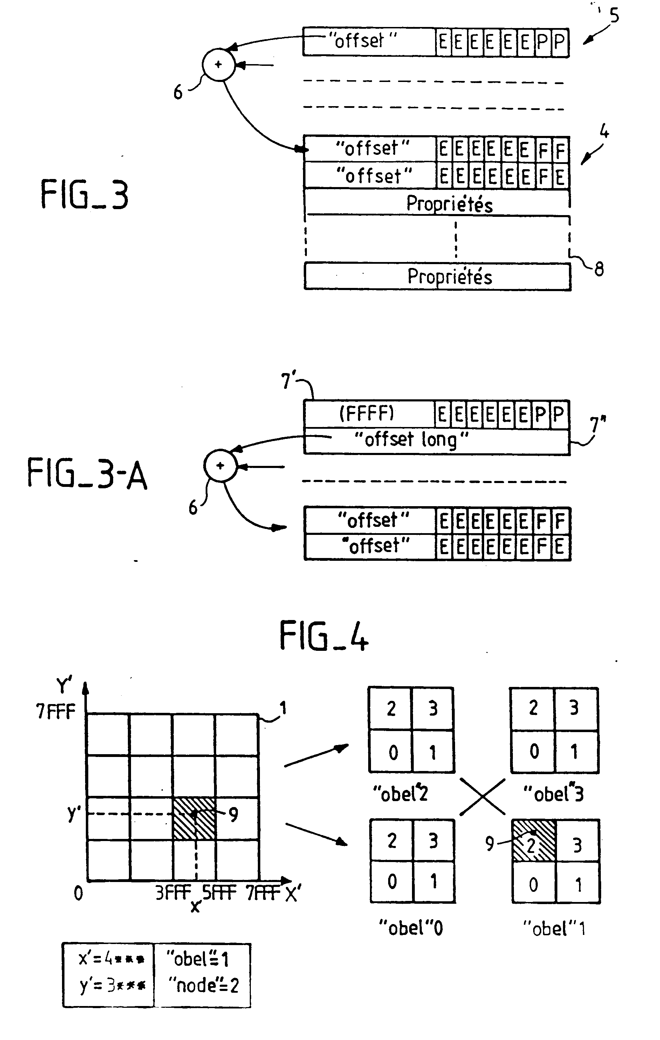

Cet offset d'adresse est la valeur qu'il faut ajouter à l'adresse absolue mémorisée d'un paquet de noeuds père pour trouver l'adresse absolue en mémoire de chacun des paquets de son bloc de paquets fils. On a schématiquement représenté en figure 3 un bloc fils 4 et son père 5. On a symbolisé en 6 un additionneur effectuant l'addition de l'offset, cet offset étant référencé 7.

Dans le cas où l'offset est plus grand ou égal à $FFFF_h$ (soit 16 bits tous égaux à "1"), ou est négatif, on écrit dans le champ 7' de 16 bits de poids forts l'indicateur $FFFF_h$, et l'offset 7" proprement dit est stocké à l'adresse suivante, dans un format signé, comme indiqué en figure 3A.

Les diverses propriétés des noeuds d'un même bloc 4 sont, le cas échéant, stockées en mémoire dans un champ à la suite immédiate de ce bloc (référence 8 sur la figure 3), dans l'ordre où se trouvent les noeuds dans le bloc, pour les noeuds qui ont une propriété. La longueur du champ 8 dépend de la longueur du codage des propriétés.

Les différentes informations de propriétés de noeuds peuvent par exemple être la densité (densité scanner) codée sur 8 ou 12 bits, n bits (n = 4 par exemple) d'identification permettant de repérer $2^n$ objets différents dans le même noeud (dans le cas où la valeur précitée de codage d'état de noeud F1 = 11 ne suffit pas, c'est-à-dire s'il y a plus de deux objets), et un ombrage précalculé de façon classique, sur 8 ou 12 bits par exemple.

L'octree est implanté dans une memoire, dite mémoire d'octree, adressée par mots de 32 bits pour

5

EP 0 323 302 B1

l'exemple de réalisation préféré. L'adresse de l'octree est l'adresse du paquet de noeuds du niveau 0 de l'octree. Ce paquet de noeuds, dit paquet de noeuds père, est un bloc réduit à un seul paquet de noeuds. Les éventuelles propriétés de chacun des huit noeuds de ce paquet sont stockées à la suite de ce paquet. (En fait, dans la structure octree théorique de la figure 2, le noeud "P" du sommet de la hiérarchie peut être omis dans un octree mémorisé puisque dans l'immense majorité des cas réels, ce noeud est toujours "P". Il suffit alors de décaler les niveaux de toute la hiérarchie théorique d'un cran vers le bas, le niveau 0 étant alors celui des huit premiers noeuds fils du père unique supprimé).

Pour pouvoir utiliser la structure stockée en mémoire en vue de visualiser l'objet renfermé dans l'univers objet sur un écran placé dans n'importe quelle direction par rapport à cet objet, il faut tout d'abord déterminer, pour tout point de l'objet non seulement son propre obel, mais également les sept obels adjacents audit obel qui soient les plus proches de ce point et soient dans le même niveau de l'octree. Cet ensemble de huit obels formant un cube sera appelé "overlay". Ces huit obels, connexes chacun par trois faces à trois des autres obels, ne partagent pas obligatoirement le même père dans l'octree. Il faut donc huit paquets de noeuds (soit 64 noeuds) pour caractériser les propriétés d'un overlay. Comme on le verra plus loin, les overlays servent à établir un autre octree correspondant à un angle de vue quelconque de l'objet, puisque dans ce cas l'obel déterminé pour un point de cet objet dans un système d'axes de coordonnées relatif à cet angle de vue (plan des axes Ox et perpendiculaire à l'axe d'observation) chevauche les obels voisins de l'obel d'origine du point, obels voisins dont il faut tenir compte si l'on ne veut pas perdre d'informations.

Un overlay est repéré par trois axes $Ox'$, $Oy'$, $Oz'$ parallèles à ceux de l'univers objet 1, l'origine O de l'overlay étant un des coins de l'obel numéro zéro de l'overlay. Les dimensions fictives de l'overlay sont, à chaque niveau, en notation hexadécimale, (7FFF, 7FFF, 7FFF). Les obels de l'overlay sont numérotés selon la même règle que pour l'octree.

A tout niveau de l'arborescence octree, un overlay délimite un espace de l'univers objet qui contient toutes les informations nécessaires au traitement de ce niveau. A tout niveau, l'overlay est repéré par des coordonnées $(x', y', z')$ comprises entre 0 et 7FFF (en hexadécimal).

On a représenté sur le diagramme (en deux dimensions, à généraliser pour trois dimensions) de la figure 4 la façon de déterminer les overlays. Soit un point 9 de l'objet à visualiser. Ce point se trouve dans l'obel hachuré, c'est-à-dire celui référencé C12 (2ème obel fils de l'obel C1 ou 2ème noeud du paquet de fils de l'obel 1). Etant donné que l'abscisse $x'$ du point 9 est comprise entre 3FFF (abscisse du centre du cube 1) et 5FFF (abscisse du centre de l'obel C1), sa valeur est de la forme, en hexadécimal : $x' = 4ghk$ (ghk étant des chiffres hexadécimaux compris entre 0 et F). De même, l'ordonnée $y'$ du point 9 est de la forme $y' = 3uvw$. Ainsi, pour un point donné dans un overlay par ses coordonnées $x'$, $y'$, $z'$, il faut trouver dans l'octree en mémoire l'information attachée à ce point. Pour cela, il faut faire correspondre à chaque ensemble de coordonnées $(x', y', z')$ les adresses (obel, noeud) dans l'overlay qui permettront de retrouver l'adresse dans l'octree mémorisé.

L'overlay étant divisé en 64 noeuds, les deux bits de poids 14 et 13 des coordonnées $(x', y', z')$ d'un point quelconque dans l'overlay donnent respectivement le numéro d'obel et le numéro de noeud dans cet obel qui contient le point en question : (relation n° 1)

numéro d'obel = def (qui est un nombre binaire avec d = bit 14 de $z'$, e = bit 14 de $y'$ et f = bit 14 de $x'$)

et,

numéro de noeud = ghi (qui est également un nombre binaire dans lequel g = bit 13 de $z'$, h = bit 13 de $y'$ et i = bit 13 de $x'$).

Parmi les 64 noeuds d'un overlay, il y a 27 façons (3 façons selon chaque axe de coordonnées : 2 noeuds adjacents parmi 4) de choisir 8 noeuds pour former les 8 obels d'un nouvel overlay appelé overlay fils. Un overlay a donc 27 fils.

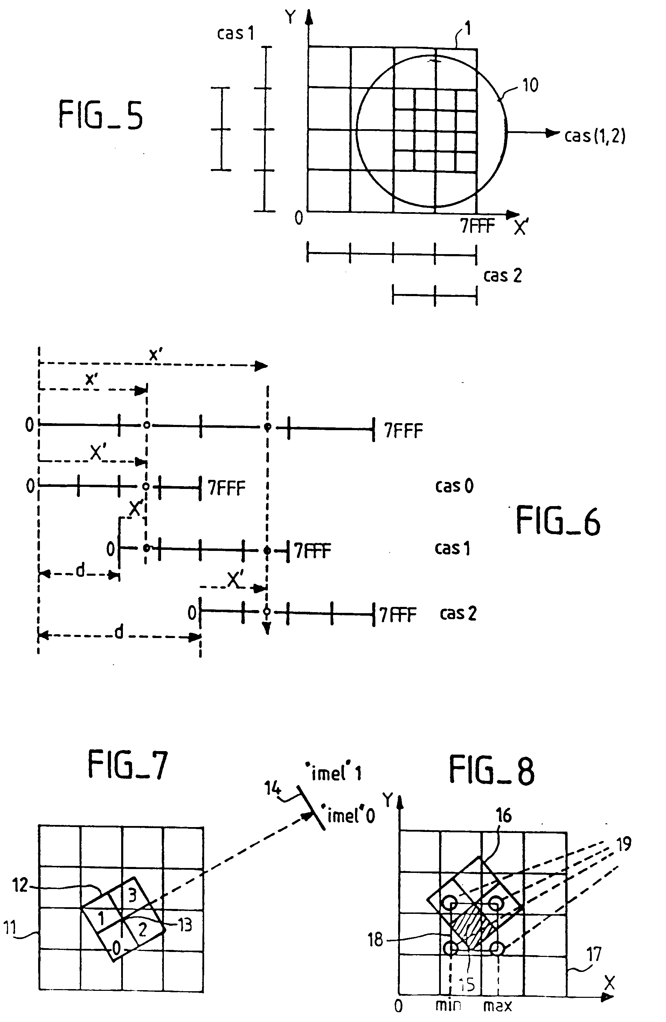

On a schématiquement illustré aux figures 5 et 6 la façon de choisir les overlays (la figure 5 a été représentée dans le plan $Ox'$, $Oy'$, et on la généralisera aisément à trois dimensions).

Pour chaque axe de coordonnées, il y a trois cas possibles, que l'on numérotera 0 à 2 :
- cas 0 : l'overlay fils est dans l'intervalle 0-3FFF
- cas 1 : l'overlay fils est dans l'intervalle 2000-5FFF
- cas 2 : l'overlay fils est dans l'intervalle 4000-7FFF.

Les overlays fils représentés dans le cercle 10 de la figure 5 se rapportent au cas 1 pour l'axe $Oy'$ et au cas 2 pour l'axe $Ox'$.

Les 27 cas possibles sont référencés par le triplet des cas relatifs à chacune des dimensions : (cas selon $Oz'$ ; cas selon $Oy'$ ; cas selon $Ox'$).

L'overlay fils est de nouveau dimensionné 0 à 7FFF (bien entendu, la valeur 7FFF de l'overlay fils n'est

6

pas la même que celle du père : elle vaut sa moitié.

Si $X'$ est la coordonnée selon $Ox'$ d'un point dans l'overlay fils et $x'$ sa coordonnée dans le père, on a la relation : (relation n°2)

$$X' = 2 . (x' - d)$$

la valeur de d (en hexadécimal) étant (voir figure 6).

0 dans le cas 0

2000 dans le cas 1

4000 dans le cas 2

Le but de l'invention étant de représenter l'image d'un objet sur un écran, on va définir maintenant un "univers cible". La description qui suit se rapporte au cas où l'on effectue une projection droite, mais il est bien entendu que l'invention n'est pas limitée à une telle projection, et que l'on peut effectuer par exemple une projection en perspective en déformant l'univers cible de façon correspondante. Contrairement au procédé décrit dans le susdit brevet européen, selon lequel on projetait dans le plan de l'écran les différents obels, le procédé de la présente invention consiste essentiellement à définir, à partir de l'octree en mémoire, un autre octree dont les axes $Ox''$ et $Oy''$ forment un plan parallèle à l'écran de visualisation, l'axe $Oz''$ du nouvel octree étant dirigé vers l'écran, et l'on ne génèrera que la partie visible depuis l'écran de ce nouvel octree.

L'univers cible (par analogie avec "univers objet") est celui correspondant au nouvel octree. Cet univers est entièrement inclus dans l'overlay de l'objet. La position de l'univers cible est repérée dans le système de coordonnées de l'overlay de l'objet par son centre, que l'on appellera ici "target center", et par la translation à effectuer dans l'overlay depuis ce centre vers un point particulier de la cible. Cette translation sera appelée ici "child offset" ou "Bbox offset" pour certains points spécifiques de la cible qui seront décrits plus loin. On a représenté de façon très schématisée (ce n'est pas du tout une projection classique de volumes sur un plan, mais plutôt un diagramme explicatif) en figure 7 un overlay 11 quelconque ainsi qu'une cible de l'univers cible 12 dont le centre est référencé 13.

L'univers cible 12 est tel que, comme précisé ci-dessus, le plan formé par ses axes $Ox''$, $Oy''$ soit parallèle au plan d'un écran 14.

L'univers cible représente l'obel de niveau zéro de l'octree à générer. Chaque obel possède huit fils définis par dichotomie, c'est-à-dire en divisant en deux l'obel selon chaque axe de coordonnée. La division successive de tous les obels définit l'arborescence de l'octree cible.

On définit l'"univers image" comme la projection canonique de l'univers cible sur l'écran 14. La position de l'univers cible dans l'overlay 11 de l'objet est donc déterminée par l'angle sous lequel on désire voir l'objet.

L'octree cible se projette de façon canonique en un "quadtree" image ("quad" parce que quatre possibilités car il s'agit d'une projection sur un plan). La correspondance entre les numéros d'obels de l'octree cible et les numéros d'"imels" (contraction de "image elements", puisqu'il s'agit d'un plan) du quadtree image est constante et indépendante de l'angle de vue ainsi que du niveau de l'octree.

Les obels de l'octree se projettent sur les imels du quadtree de l'image de la façon suivante, selon l'obel qui est plus près de l'écran s'il masque l'autre, ou l'autre s'il n'est pas masqué par le premier (c'est-à-dire si le premier est vide) :

Obel 0 ou 4 sur l'imel 0, obel 1 ou 5 sur l'imel 1, obel 2 ou 6 sur l'imel 2, et obel 3 ou 7 sur l'imel 3. Conventionnellement, les obels 4, 5, 6 et 7, qui sont les plus proches de l'écran, cachent respectivement les obels 0, 1, 2 et 3. On peut ainsi établir la règle suivante : l'obel numéro Cn, qui s'écrit sur trois bits "b2 : b1 : b0" se projette sur l'imel numéro "b1 b0", b2, b1 et b0 étant les coordonnées selon $Oz''$, $Oy''$ et $Ox''$ respectivement.

La matrice des pixels de l'image obtenue sur l'écran correspond à l'ensemble des imels d'un même niveau du quadtree. Ainsi, les pixels d'une image 512 x 512 pixels seront atteints au niveau 8 du quadtree, le premier niveau étant le niveau zéro, qui représente quatre imels dans un quadtree de paquet de noeuds.

La fonction d'échantillonnage de l'overlay permet de décider de la valeur du noeud d'un obel de l'octree cible selon sa position dans l'overlay objet. Deux cas se présentent selon que l'obel en question est un obel feuille de l'octree cible ou non.

On convient d'abord que les feuilles de l'octree cible seront toujours générées à un niveau fixe lié à la taille de l'image. Un obel est donc un obel feuille si et seulement si il est au dernier niveau.

Dans le cas où l'obel est un obel feuille, la valeur de l'obel cible est alors "E" si la valeur d'échantillonnage de l'overlay au centre de l'obel est "E", et elle est "F" dans le cas contraire.

Dans le cas où l'obel n'est pas un obel feuille, on effectue un test, que l'on appellera par la suite test de "Bbox" (contraction de "Bounding Box", et qui est illustré par la figure schématique 8. Soit un obel cible 15 faisant partie d'une cible 16 dans un overlay 17. La Bbox 18 est le parallélépipède rectangle, dont les côtés sont parallèles aux axes respectifs de l'overlay 17, et qui est circonscrit à l'obel cible (c'est-à-dire que les arêtes de ce parallélépipède passent par les sommets de l'obel cible 15). La valeur de l'obel cible sera "E" si les valeurs d'échantillonnage de l'overlay aux huit coins 19 (seuls quatre coins 19 sont représentés sur la figure 8, qui n'est pas une projection classique sur un plan) de la Bbox 18 sont toutes égales à "E", et elle sera "P" dans le cas contraire. Ce test n'est correct que si la taille dans toutes ses dimensions de la Bbox n'excède pas la taille des obels de l'overlay (c'est-à-dire 2000h pour les obels fils). De la sorte, on est sûr que si l'on décide d'une valeur "E", aucun des descendants de l'obel 15 ne pourra avoir une autre valeur que "E" en utilisant la même règle. Il faudra donc que ces dimensions relatives de la Bbox et des obels soient toujours vérifiées. On définit alors la règle d'inclusion de la cible : la cible doit être incluse dans l'overlay, les dimensions de la Bbox de la cible, selon chacun des axes de coordonnées de la cible, doivent toutes être inférieures à 4000h.

Pour établir une relation géométrique entre les overlays de l'objet et l'octree cible, le procédé de l'invention prévoit de contrôler concurremment les parcours des overlays dans l'objet et le parcours dans l'octree cible, de façon que les niveaux y soient identiques à tout moment, qu'à tout niveau l'obel cible soit entièrement inclus dans l'overlay objet, et qu'à tout niveau la taille de Bbox des obels fils des obels de la cible soit inférieure à 2000h.

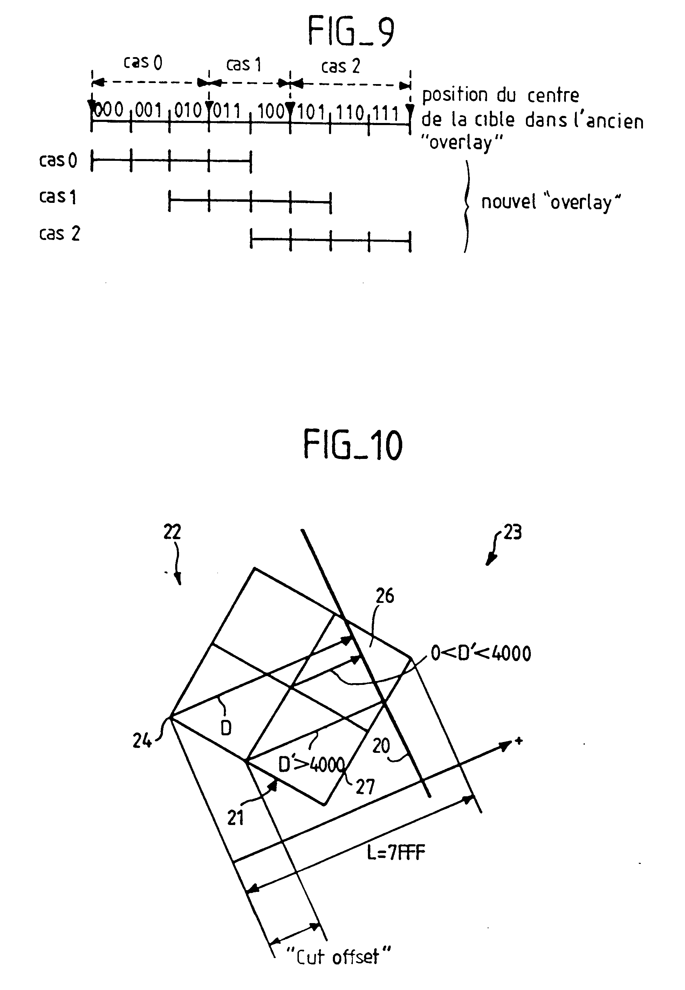

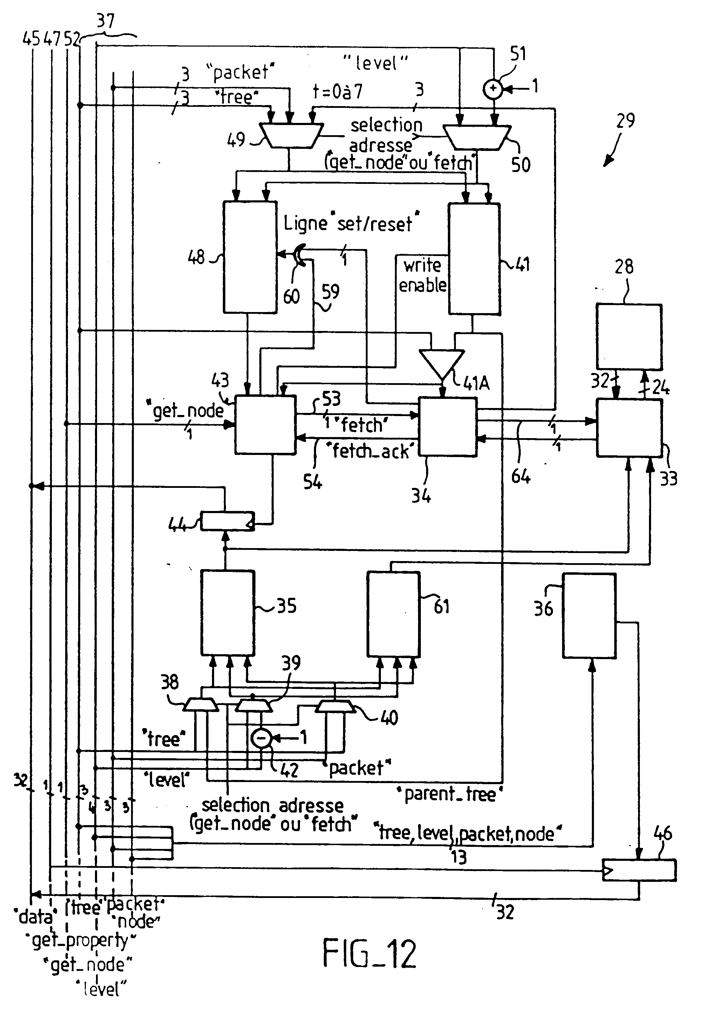

Si l'on respecte bien ces règles du procédé de l'invention, la sélection de l'overlay d'un obel fils peut se faire uniquement à partir de la position de son centre dans l'overlay. Selon une autre règle du procédé de l'invention, on choisit l'overlay dont le centre est le plus proche du centre de l'obel fils (on désignera ce dernier par "child center"). Si, selon un axe de coordonnées de l'overlay (et on applique cette règle pour chacun des trois axes de coordonnées), la coordonnée du child center est strictement inférieure à 3000h, on décide le cas zéro, si cette coordonnée est supérieure ou égale à 3000h et strictement inférieure à 5000h, on décide le cas 1, et si cette coordonnée est supérieure ou égale à 5000h, on décide le cas 2. Cette décision résulte donc de la combinaison des trois bits de poids fort du child center, et ne nécessite aucun comparateur. Les coordonnées du child center dans le nouvel overlay sélectionné deviennent le nouveau "target center" (centre de la cible) au niveau inférieur suivant. Cette règle est illustrée par le diagramme de la figure 9, où l'on a inscrit les bits de poids 14, 13 et 12 du child center. Ainsi, lorsque le trinôme formé par les bits de poids 14, 13, 12 du child center est égal à "000", "001" ou "010", on a le cas 0, s'il est égal à "011" ou "100", on a le cas 1, et s'il est égal a "101", "110" ou "111", on a le cas 2. La position correspondante du nouvel overlay (dans une seule dimension) a été représentée sur la figure 9.

Le procédé de l'invention permet également de représenter des coupes d'objets en 3D. A l'aide de la figure 10, on va expliquer la géométrie relative aux plans de coupe. Le rôle des plans de coupe est de décider si un fils de l'obel cible courant est entièrement d'un côté ou de l'autre d'un plan fixe quelconque, ou est coupé par ce plan. Sur la figure 10, ce plan de coupe est référencé 20, et il coupe l'obel cible 21. On distingue la région 22 "intérieure" par rapport au plan 20, qui est la région retenue pour être visualisée, et la région "extérieure" qui doit être supprimée. Cette décision est prise à un niveau donné en fonction de la distance entre l'obel fils en question et le plan 20. Un nombre signé sur 16 bits représente la distance D entre le coin le plus à "l'intérieur" par rapport au plan et le plan (c'est-à-dire le coin de l'obel le plus éloigné du plan 20 dans la région 22). Ce nombre est normalisé de façon que la distance L entre le coin 24 de l'obel cible le plus à l'intérieur et le coin 25 le plus à "l'extérieur" (le plus loin du plan 20 dans la région 23) soit égale à 7FFF$_h$, c'est-à-dire le plus grand nombre positif possible selon les conventions adoptées. A un niveau donné, on obtient la distance $D^{'}$ entre chacun des obels fils et le plan 20 en ajoutant un offset signé, dont la valeur est indépendante du niveau, du fait de ladite normalisation. On peut alors facilement prendre une décision pour l'obel fils sélectionné en connaissant cette distance $D^{'}$ :

- si $D^{'}$ est inférieure ou égale à 0 (en valeur signée), l'obel fils est entièrement à l'extérieur,
- si $D^{'}$ est positive et inférieure à 4000$_h$, le plan coupe l'obel fils (cas de l'obel fils 26), et
- si $D^{'}$ est supérieure ou égale à 4000$_h$, l'obel fils est entièrement à l'intérieur (cas de l'obel fils 27 par exemple).

La nouvelle distance normalisée pour le fils sélectionné est simplement le double de l'ancienne. Cette nouvelle distance n'est à calculer que si l'obel en question est coupé par le plan de coupe. En effet, si un obel est entièrement d'un même côté d'un plan de coupe, ses fils éventuels seront également du même côté du plan.

Pour visualiser l'image de l'objet examiné, on peint les différents pixels correspondant à la matière faisant partie de cet objet. Si, en cours de parcours de l'octree cible, un obel feuille est affecté d'une valeur "F", on décide de peindre le pixel correspondant. Les coordonnées x et y du pixel à peindre correspondent aux coordonnées $x^{'}$, $y^{'}$, $z^{'}$ de l'obel en question, qui sont générées au cours du parcours de l'octree.

Pour parcourir l'octree cible, le procédé de l'invention exécute une séquence d'opérations de contrôle, en décidant à chaque niveau : s'il faut descendre (opération appelé "push") dans l'octree et si oui vers quel fils, ou s'il faut remonter dans l'octree (opération appelée "pop"), et s'il faut peindre l'image.

Dans un état donné de traitement, on connaît : le niveau des octrees objet et cible, l'overlay courant, la position géométrique de la cible dans l'overlay courant, et le statut des huit fils de la cible courante, c'est-à-dire s'ils ont été déjà visités ou non. Le procédé de l'invention permet, dans un état, d'effectuer un échantillonnage de l'overlay en tout point, en particulier soit d'effectuer un test Bbox pour un des fils, soit de décider de peindre ou non un obel fils. Lorsqu'on désire supprimer les parties cachées, un pixel déjà peint entraîne l'inactivation des obels cachés par ce pixel.

L'opération "push" précitée consiste : à sauvegarder l'état courant du traitement, à incrémenter le niveau, et à calculer pour un fils déterminé de l'obel cible le nouvel état de traitement en fonction de l'ancien.

L'opération "pop" précitée consiste : à décrémenter le niveau et à récupérer l'état sauvegardé du traitement à ce niveau. La règle de traitement est alors, tant que le traitement n'est pas fini, si le niveau courant n'est pas le fond : chercher le premier noeud du paquet de noeuds courant non encore visité et qui passe le test Bbox, si un tel noeud existe, exécuter un push, sinon, si on est au sommet de la hiérarchie, le traitement est terminé, et si on n'est pas au sommet, il faut exécuter un pop. Si le niveau courant est le fond de la hiérarchie, il faut projeter dans l'ordre de priorité les noeuds du paquet de noeuds courant et peindre l'image au fur et à mesure, puis exécuter un pop.

L'octree cible est parcouru d'abord en donnant la priorité aux obels les plus près de l'écran (ce qui définit l'ordre de priorité : c'est le processus dit "front to back"). Une fonction, que l'on appellera "next", consiste à sélectionner alors les obels à peindre (en mode non transparent) non masqués par un obel déjà peint. Un obel n'est donc visité que s'il est réellement projeté sur l'écran. En mode transparent, tous les obels non vides de l'objet sont visités.

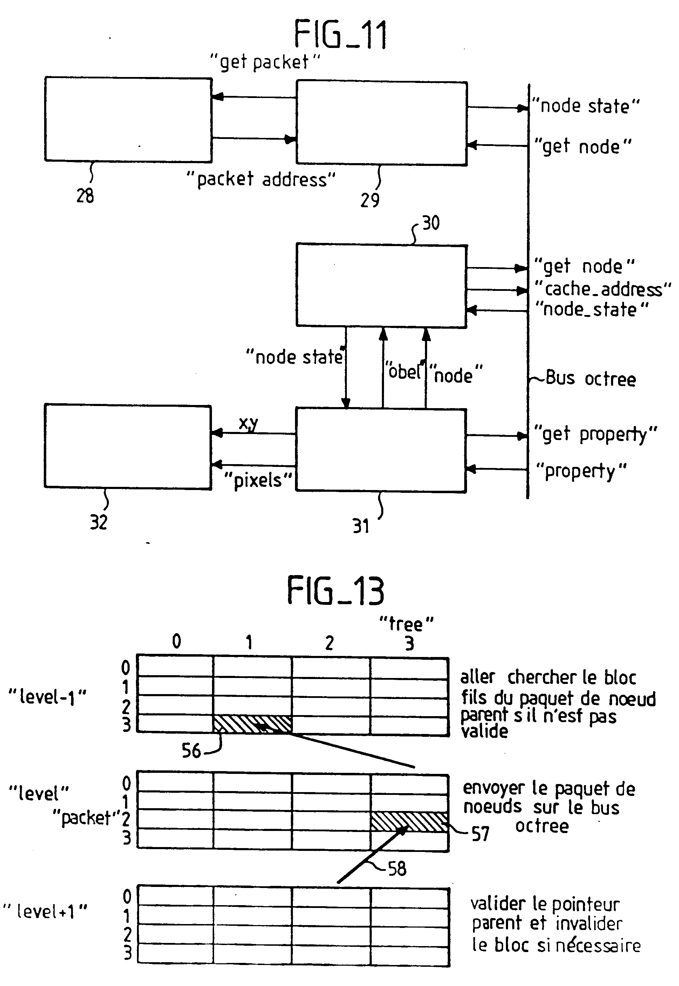

On va maintenant décrire un mode de réalisation de dispositif de mise en oeuvre de la méthode de l'invention. Le bloc diagramme d'un tel dispositif est représenté en figure 11.

Ce dispositif comporte essentiellement : une mémoire d'octree 28, un cache d'octree 29, un processeur géométrique 30 et un générateur d'image 31 avec sa mémoire associée 32. Les éléments 29,30,31 sont reliés au bus d'octree, composé d'un bus d'adresses, d'un bus de données et de deux commandes "get node" et "get property" décrits ci-dessous.

La mémoire d'octree 28 stocke l'octree représentant l'objet à visualiser. Cette mémoire n'est accédée qu'en lecture pour tout le traitement ultérieur concernant le même objet. L'octree est stocké dans la mémoire 28 sous une forme qui permet de le parcourir rapidement selon tous les chemins. Toutes les informations de nature à être traitées par le processeur géométrique sont stockées toujours selon la même structure de données pour pouvoir être traitées facilement et rapidement. La taille des données à stocker peut varier, selon l'objet à visualiser, d'environ 1M mots ($2^{20}$ mots) de 32 bits à environ 32 M mots de 32 bits. La réalisation de cette mémoire et les moyens permettant d'obtenir l'octree ne font pas partie de l'invention, ayant été décrits dans les publications précitées. On dira simplement que cette mémoire est une RAM de mots de 32 bits.

Le cache d'octree 29 a pour fonction de fournir très vite les données au processeur géométrique 30. Alors que la mémoire d'octree 28 est accédée par blocs de mots, le cache 29 est accédé pour un paquet de noeuds (16 bits) ou pour une propriété (32 bits). Grâce à la structure des données en mémoire d'octree, le taux de présence des informations dans le cache 29 est très élevé, c'est-à-dire que la plupart des informations nécessaires au processeur à tout instant se trouvent dans le cache.

Le processeur géométrique 30, qui sera décrit de façon détaillée ci-dessous, assure la mise en oeuvre du procédé de l'invention, et en particulier c'est lui qui décide du parcours de l'octree.

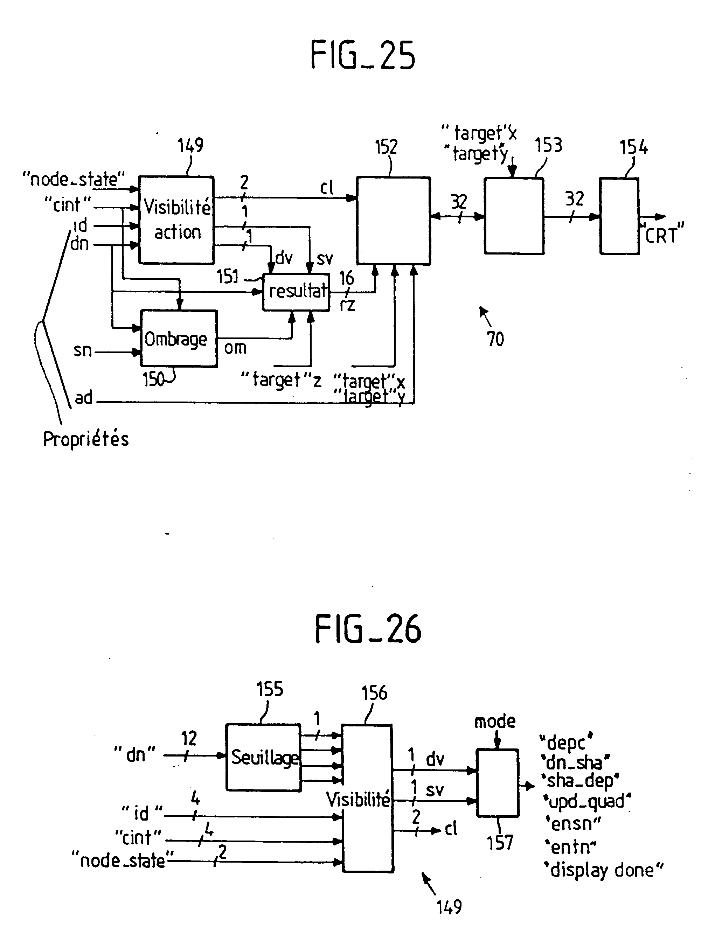

Le générateur d'image 31 calcule la valeur des pixels à peindre sous contrôle du processeur 30. Un pixel à une position donnée de l'image n'est calculé qu'une seule fois. L'image est générée dans un tampon ("frame buffer", décrit ci-dessous en référence à la figure 25) capable de stocker une image complète, qui est dans un exemple de réalisation une RAM de 512 x 512 mots de 32 bits (pour des images de 512 x 512 pixels).

Le cache d'octree a été représenté de façon détaillée sur la figure 12.

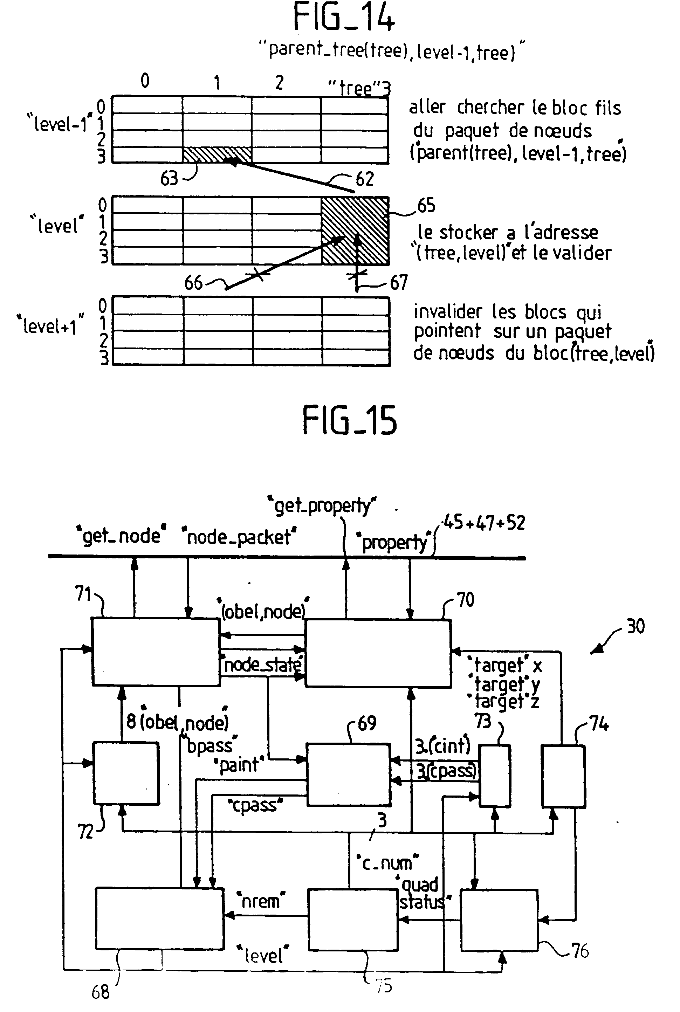

L'octree, mémorisé dans la mémoire 28, est accédé en lecture par un lecteur de blocs 33, sous la commande d'un séquenceur 34 (commandant la fonction "fetch") et décrit ci-dessous en référence à la figure 14. La fonction du séquenceur 34 est de charger, à la demande du processeur géométrique 30, les valeurs lues dans la mémoire d'octree dans les deux mémoires de cache proprement dites 35, 36 (reliées au lecteur 33), par blocs de paquets de noeuds. Ces informations sont ensuite réadressées, en lecture, dans les mémoires 35, 36, de façon à fournir directement des valeurs exprimées sous forme "arbre, niveau, paquet, noeud", conformément aux besoins du processeur géométrique, qui peut donc exploiter directement ces informations.

La mémoire 35, dite mémoire de paquets de noeuds, est dans le cas présent une mémoire capable de stocker 1024 paquets de noeuds (sur 16 bits) organisés en 8 arbres, 16 niveaux et 8 paquets, dont les adresses sont présentes sur le bus d'adresses octree 37, respectivement sous les appellations "tree" sur 3 bits, "level" sur 4 bits, et "packet" sur 3 bits. Ainsi, chaque niveau peut stocker 64 paquets de noeuds. Le processeur géométrique 30 sélectionne au niveau courant 8 paquets de noeuds parmi ces 64 paquets pour former l'overlay courant. Un bloc de paquets de noeuds est stocké à une adresse (donnée par les informations tree" et "level"), l'information d'adresse "packet" variant de 0 à 7. Les entrées d'adressage de la mémoire 35 sont reliées aux sorties de trois multiplexeurs 38 à 40 à deux entrées chacun. Une première entrée du multiplexeur 38 est reliée aux fils d'adressage "tree" du bus 37, et son autre entrée est reliée à la sortie d'une pile 41 fournissant l'adresse "arbre père" sur 3 bits. Une première entrée du multiplexeur 39 est reliée aux fils d'adressage "level" du bus 37, et son autre entrée est reliée à la sortie d'un transcodeur 42 dont l'entrée est reliée aux mêmes fils d'adressage "niveau" du bus 37. Le transcodeur 42, realisé à l'aide d'une mémoire morte par exemple, fournit une adresse "level - 1" à partir de l'adresse "level". La programmation d'une telle mémoire est évidente pour l'homme de l'art. Une entrée du multiplexeur 40 est reliée aux fils d'adressage "packet" du bus 37, et son autre entrée est reliée aux fils d'adressage "tree" du bus 37. Les entrées de commande des multiplexeurs sont reliées aux sorties "select address" du séquenceur 34 et du séquenceur 43 (commandant la fonction "get node").

La sortie de la mémoire 35 est reliée via un registre 44 au bus de données 45 (faisant partie du bus octree). L'entrée de signaux d'horloge du registre 44 est reliée à une sortie du séquenceur 43.

La mémoire 36, dite "mémoire de propriétés", est, dans le cas présent, une mémoire ayant une capacité suffisante pour stocker 8192 propriétés organisées en 8 arbres, 16 niveaux, 8 paquets et 8 noeuds, informations présentes sur le bus d'adresses 37 sous les appellations "tree", "level", "packet" et "node" (cette dernière sur 3 bits). Les propriétés d'un paquet de noeuds stocké à une adresse (définie par les informations précitées "tree", level" et "packet", sont stockées à des adresses données par les informations "tree", "level", "packet", l'information d'adresse "node" variant de 0 à 7. La mémoire 36 est adressée par les fils "tree", "level", packet" et "node" du bus 37, et sa sortie est reliée via un registre 46 au bus de données 45. L'entrée de signaux d'horloge du registre 46 est reliée au fil 47 "get property", faisant partie du bus d'octree.

Les informations ainsi adressées sont gérées dans le cache 29 par un bit de validité et la pile 41 "parent-tree" réalisé par exemple à l'aide d'une RAM. Le bit de validité, produit par une RAM 48, adressée par les informations "tree" et "level", indique que le bloc de paquets de noeuds de la même adresse est valide, c'est-à-dire que les données contenues dans ce bloc peuvent être envoyées au processeur géométrique 30. Les entrées d'adressage des mémoires 48 et 41 sont reliées aux sorties de deux multiplexeurs 49,50 à trois entrées chacun. Les deux premières entrées du multiplexeur 49 sont reliées aux fils "tree" et "packet" du bus 37 et sa troisième entrée est reliée à une sortie (sur 3 bits dans le présent exemple) du séquenceur 34, donnant une information "tree" variant de 0 à 7. Une première entrée du multiplexeur 50 est reliée aux fils "level" du bus 37, sa deuxième entrée est reliée via un transcodeur 51 aux mêmes fils "level". Le transcodeur 51, réalisé par exemple à l'aide d'une mémoire morte, donne l'information "level + 1" à partir de l'information "level". La troisième entrée du multiplexeur 50 est reliée de la même façon que la troisième entrée du multiplexeur 49. Les entrées de commande des multiplexeurs 49,50 sont reliées aux sorties "select address" des séquenceurs 34,43. Le pointeur de la RAM 41 "parent-tree" donne pour chaque bloc, dont l'adresse est fournie par "tree" et "level" sur le bus 37, l'information de numéro "tree" correspondant au paquet de noeuds père du niveau précédent. L'adresse d'un paquet de noeuds est, comme' précisé ci-dessus, le triplet d'informations ("tree", "level", "packet"). Les adresses des propriétés des noeuds de ce paquet sont données par ("tree", "level", packet", "node"), "node" prenant les valeurs de 0 à 7 selon le numéro du noeud considéré. Ce paquet de noeuds, fils du noeud ayant l'adresse "node" d'un paquet de noeuds situé à l'adresse ("tree", "level", "packet") sera à l'adresse ("packet", "level + 1", "node"). Ce mode d'adressage permet de gérer à un niveau donné du cache des blocs de paquets de noeuds ne partageant pas le même père, ce qui est nécessaire pour que ces blocs correspondent à un même overlay. Le cache est commandé par les signaux "get node" et "get property", sur 1 bit chacun, fournis par les fils 52 et 47 du bus de données octree, et arrivant respectivement au séquenceur 43 et au registre 46.

Lorsque le signal "get node" est activé, le cache 29 lit les adresses des paquets de noeuds ("tree", "level", "packet") présentes sur le bus 37. Le cache 29 exécute alors les étapes suivantes : la mémoire 48 vérifie que le bloc d'adresse ("tree", "level") est valide ; s'il n'est pas valide il en avertit le séquenceur 43 qui active la fonction "fetch" pour aller chercher le bon bloc en envoyant un signal via le fil 53 au séquenceur 34 et en attendant un signal d'acquittement de ce dernier via le fil 54. Cette activation de la fonction "fetch" est schématiquement représentée en haut de la figure 13, et reprise en détail à la figure 14. Le pointeur 55 de la mémoire 41 sous la commande du séquenceur 34 est positionné sur le paquet de noeuds père, ce qui donne, selon la règle d'adressage explicitée ci-dessous, l'adresse du paquet de noeuds fils 57 valide.

Dès qu'il a reçu le signal d'acquittement sur la liaison 54, le séquenceur 43 commande via la liaison "select address" et l'un des multiplexeurs 38 à 40 l'adressage (en termes de "tree", "level", "packet") de la mémoire 35, puis il active le registre 44 qui envoie le noeud de paquets correspondant sur le bus 45 (figure 13, diagramme du milieu, pour le paquets de noeuds 57).

Ensuite, le séquenceur 43 commande, via la liaison "select address" et les multiplexeurs 49 et 50 le nouvel adressage des mémoires 48 et 41 (adresse "packet", "level + 1") pour mettre à jour le pointeur "parent-tree", dans 41, du bloc du niveau supérieur selon la règle d'adressage de l'adresse ("packet", "level + 1"), c'est-à-dire que si, comme illustré en figure 13, le paquet envoyé est le numéro 2 du niveau "level", on range le bloc fils dans l'arbre 2 du niveau "level + 1". Si à cette adresse existait un bloc valide pour un autre pointeur de père, il est invalidé via la commande 59 et le "OU" 60, et le séquenceur 43 positionne le pointeur 58 à l'adresse "tree" correcte.

Pour ce qui est de la fonction "get property", aucune vérification de validité n'est effectuée en réponse à un signal "get property" (signal à 1 bit sur le fil 47), puisque dans le bloc des propriétés, les différentes propriétés sont rangées dans l'ordre des noeuds correspondants et que leurs adresses sont liées. La mémoire 36 fournit alors la propriété correspondant à l'adresse ("tree", "level", "packet", "node") disponible à ce moment sur le bus 37, via le registre 46 qui est activé par ce signal "get property".

A une demande "fetch" (émise par 43) d'un bloc se trouvant à l'adresse ("tree", "level"), le séquenceur 34 commande (via "select address"), l'adressage en "tree", "level" des mémoires 41 et 48 par les multiplexeurs 49,50 pour avoir le numéro d'arbre père, puis il commande (via "select address") l'adressage en "parent-tree", "level - 1", "tree", par les multiplexeurs 38 à 40 de la mémoire 34 pour lire le paquet de noeuds père, selon la règle d'adressage précitée : sur la figure 14, le pointeur 62 est dirigé sur ce paquet père 63. Puis le séquenceur 34 lit l'adresse absolue en mémoire d'octree du bloc ("tree", "level") dans la mémoire 61. La mémoire 61 est reliée aux sorties des trois multiplexeurs 38 à 40, et reçoit du bloc de lecture 33 les adresses des blocs qui y transitent. La mémoire 61 établit à partir de l'adresse courante (adresse relative) des noeuds et des offsets correspondants l'adresse absolue de ces noeuds.

Ensuite, le séquenceur 34 active via la liaison à 1 bit 64 le lecteur 33, qui envoie aux mémoires 35, 61 et 32 les informations "paquet de noeuds", "adresse de bloc" et "propriété" respectivement, aux adresses absolues ("tree", "level", "packet" variant de 0 à 7 et "node" variant de 0 à 7). Sur la figure 14, on a représenté en 65 le bloc fils du paquet 63. Ce bloc fils est stocké à l'adresse ("tree","level"), où le séquenceur 34 le valide. Puis, le séquenceur 34 sélectionne (par la liaison "select address" des multiplexeurs 50 et 49) les adresses ("t" = 0 à 7, "level + 1") des mémoires 41,48. Ensuite, il invalide les blocs du niveau "level + 1" si "parent-tree" est différent de "tree", ce qui est réalisé par le comparateur 41A (dont les entrées sont reliées à "tree" du bus 37 et à la sortie de la pile 41, et dont la sortie est reliée aux séquenceurs 34 et 43), c'est-à-dire qu'il invalide les blocs qui étaient valides pour un paquet de noeuds père appartenant au bloc ("tree", "level", bloc 65 sur la figure 14). Sur la figure 14, on a symbolisé cette invalidation par des croix sur les pointeurs 66,67 pointant le bloc 65. En effet, ce bloc ayant été modifié, les blocs du niveau supérieur ("level + 1") qui lui sont liés ne sont plus valides. Enfin, le séquenceur 34 envoie un signal d'acquittement au séquenceur 43 sur la ligne 54, et se met en attente d'un autre signal "fetch" par la ligne 53. Le séquenceur 43 reprend alors le déroulement de son processus, c'est-à-dire le processus décrit ci-dessus après la réception du signal d'acquittement.

La gestion de la validité des blocs est automatique. Les commandes suivantes sont autorisées à partir du niveau zero :

- envoi d'une commande "get node" pour des adresses définies par ("tree", "level", "packet") pour tout niveau ("level") compris entre zéro et le niveau courant (dernier niveau demandé).

- envoi d'une commande "get prop" pour toutes les adresses définies par ("tree", "level", "packet", "node") d'un niveau inférieur au niveau courant dont la commande "get node" pour l'adresse ("tree", "level", "packet") a été précédemment faite.

On a représenté en figure 15 le bloc diagramme fonctionnel du processeur géométrique 30, avec le seul bus de données octree 45 et les commandes "get property" 47 et "get node" 52.

Le processeur géométrique comporte d'abord un séquenceur 68 qui assure la gestion des différentes étapes du procédé de l'invention. Le séquenceur 68 passe par cinq états fondamentaux notés Etat 0 à Etat 4.

Etat 0 : c'est le test "Bbox". Dans cet état, le séquenceur commande l'exécution du test "Bbox" pour un fils spécifié de l'obel cible dans le but de l'évaluer. Le test sera positif si la valeur de ce fils n'est pas "E".

Etat 1 : fonction "push". Le séquenceur commande l'exécution d'un "push" pour un fils spécifié de l'obel cible si le test Bbox est positif. Le processeur choisit alors l'overlay fils et calcule les nouvelles coordonnées de la nouvelle cible.

Etat 2 : fonction "Pop". Le séquenceur commande l'exécution de cette fonction lorsque tous les fils de l'obel cible courant ont été visités.

Etat 3 : fonction "test paint" et génération de l'image. Lorsqu'il faut peindre des pixels de l'image, le séquenceur active la fonction "génération de l'image" qui calcule la valeur à affecter au pixel courant. Les deux obels cachés par le pixel peint sont inhibés, et ne seront donc plus visités.

Etat 4 : "Next". Dans cet état, le séquenceur détermine le fils suivant de l'obel courant à visiter.

Le séquenceur, ainsi que les autres éléments du processeur géométrique sont commandés par les variables suivantes (figure 15) :

"c-num" : numéro du fils de l'obel courant à visiter (varie de 0 à 7).

"n-rem" : bit de validité de la variable "c-num". Si ce bit est à zéro, cela signifie qu'il n'y a plus de fils de l'obel courant à visiter.

"level": niveau courant de l'octree cible.

"bottom" : nombre booléen, vrai si "level" correspond au fond de l'octree.

"top" : nombre booléen, vrai si "level" correspond au sommet de l'octree (niveau 0).

"bpass" et "cpass" : nombres booléens, vrais si le fils de numéro "c-num" de l'obel courant est à visiter.

"paint" : nombre booléen, vrai si le fils de numéro "c-num" de l'obel courant est à projeter sur l'image.

L'état de départ à l'initialisation du séquenceur est l'état 0, pour lequel "level" = 0 (variable "top" vraie), et "c-num" est le numéro du premier fils à visiter (variable "n-rem" = 1). Typiquement, pour le mode de réalisation à résolution de 512 x 512, on a alors "c-num" = 7.

Les seules transitions possibles entre les différents états (référencés E0 à E4) du séquenceur sont les suivantes :

E0→E 1 :     "bpass" et "cpass" sont vrais
E0→E4 :     "bpass" ou "cpass" est faux
E1→E0 :     "bottom" est faux
E1→E3 :     "bottom est vrai
E3→E4 :     est toujours vrai (de E3 on passe forcément à E4)
E4→E3 :     "bottom" est vrai et "nrem" est vrai
E4→E2 :     "top" est faux et "nrem" est faux
E4→E0 :     "bottom" est faux et "nrem" est vrai
E4→fin :     "top" est vrai et "nrem" est faux.

Le processeur 30 comporte une mémoire RAM 69 assurant la fonction "test paint".

La fonction "test paint" (état E3) commande l'échantillonnage de l'overlay par l'obel fils courant (de numéro indiqué par "c-num"). La valeur de "paint" se déduit de l'état du noeud correspondant ("node state"). Dans le présent mode de réalisation, les noeuds dont l'état est "F'" sont peints. La fonction génération de l'image est activée si "paint" est vraie, puis le bit "c-num" ou "c-num-4" (si "c-num" est supérieur à 3) du registre "quad status" est validé.

La fonction de génération de l'image (bloc 70 de la figure 15) sera décrite ci-dessous en référence à la figure 25.

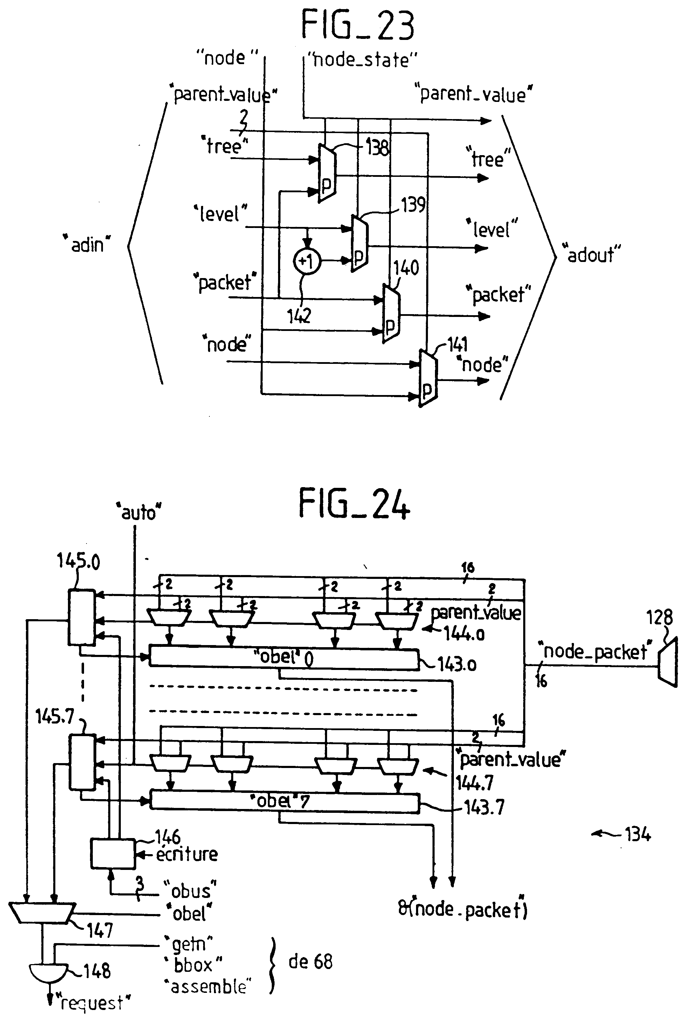

La fonction "test Bbox" assure l'échantillonnage de l'overlay pour les huit coins du fils de l'obel courant. Si un des signaux "node state" n'est pas nul, le nombre booléen "bpass" est vrai. Cette fonction fait partie de l'ensemble de fonctions référencé 71 sur la figure 15, et elle est expliquée plus en détail ci-dessous en référence à la figure 24.

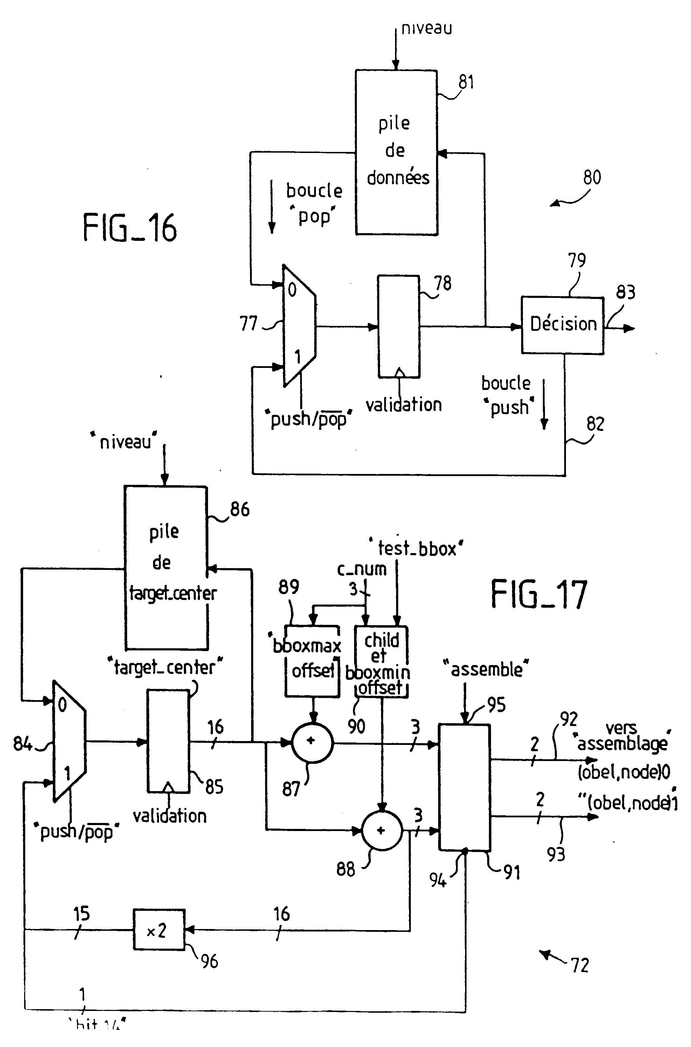

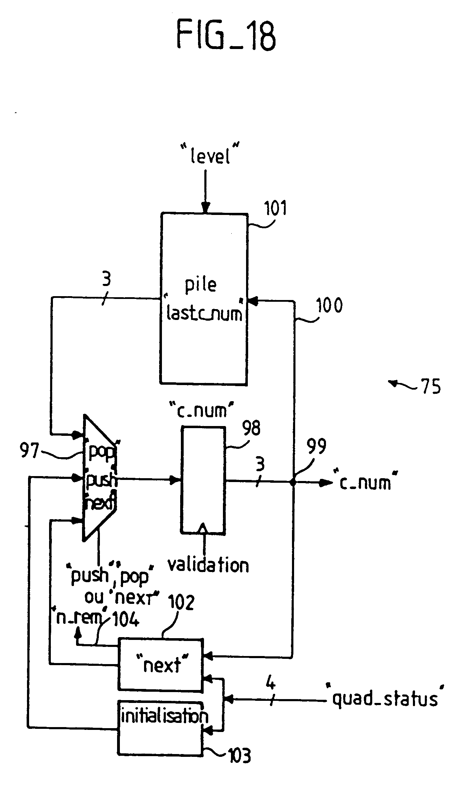

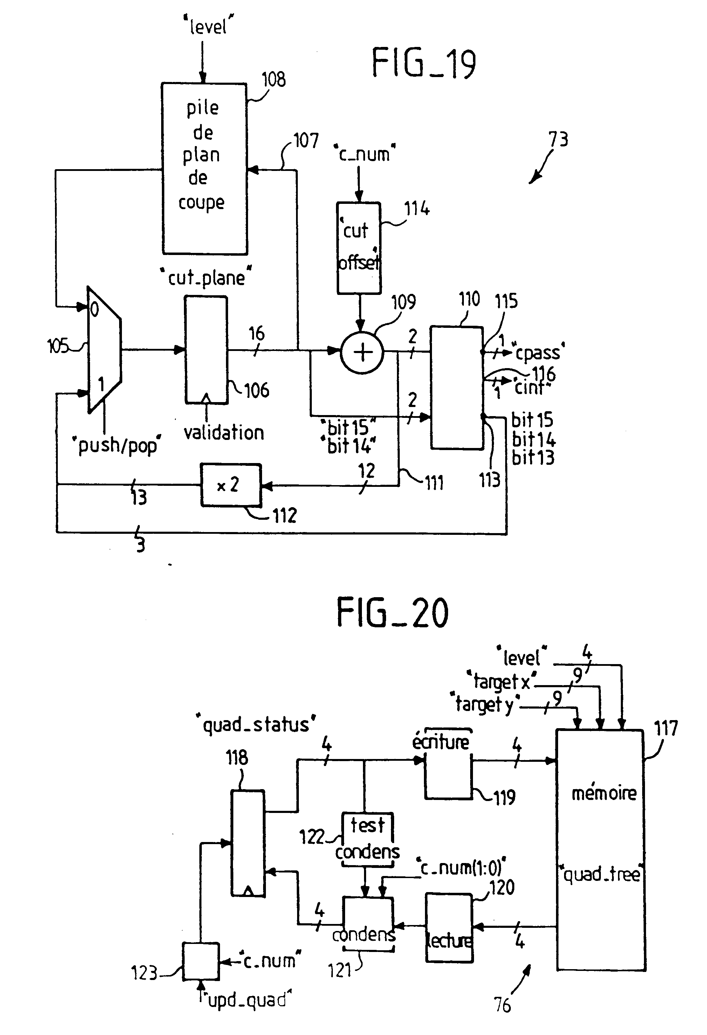

La fonction "push', expliquée ci-dessous en référence à la figure générale 16 en particulier, consiste à sauver les registres d'état "target status" et "target center" (voir figure 17) dans leurs piles correspondantes au niveau courant, à sauver le registre "quad status" (voir figure 20) dans la mémoire "quad tree" au niveau courant, à l'adresse "target x", "target y", à assembler le nouvel overlay, à calculer les nouvelles valeurs de "target center", et de "target x", "target y", "target z", à incrémenter le niveau courant, à lire la nouvelle valeur de "quad status" au nouveau niveau courant et à la nouvelle adresse "target x", "target y", et à initialiser le nouveau "target status" en fonction du nouveau "quad status", le nouveau "c-num" étant alors disponible (voir figure 18).

La fonction "pop" (voir figure 16) consiste à sauver le registre "quad status" dans la memoire "quad tree" au niveau courant à l'adresse "target x", "target y" si sa valeur est FF en hexadécimal, on retient la valeur "c-num", (dont les deux bits de poids faible suffisent), de l'imel fils à condenser, puis on décrémente le niveau courant, on charge les registres "target status", "target center" depuis leurs piles respectives au nouveau niveau courant, on calcule les nouvelles valeurs "target x", "target y", "target z", on lit la nouvelle valeur de "quad status" au nouveau niveau courant à la nouvelle adresse "target x", "target y", et on effectue la condensation s'il y a lieu.

Le processeur géométrique 30 comporte en outre une fonction "géométrie" 72 explicitée ci-dessous en référence à la figure 17, une fonction "plan de coupe" 73 explicitée ci-dessous en référence à la figure 19, un ensemble 74 de trois registres donnant respectivement les adresses "target x", "target y", "target z" de l'obel cible, une fonction "next" 75 explicitée ci-dessous en référence à la figure 18, et une fonction 76 de lecture/écriture de quad-tree explicitée ci-dessous en référence à la figure 20.

L'état du processeur géométrique 30, à un niveau donné, est décrit par les registres et piles suivants :
- registre "quad status" (voir figure 20) à quatre bits donnant l'état de l'imel courant du quad tree
- registre "c-num" (voir figure 18) à trois bits donnant le numéro du fils de l'obel courant à visiter
- registre "target center" à trois fois 16 bits (pour les trois axes) donnant les coordonnées du centre de l'obel cible courant dans le repère de l'overlay courant
- pile "last c-num" mémorisant l'ensemble des "c-num" déjà visités pour tous les niveaux inférieurs
- pile "target center" mémorisant l'ensemble des valeurs de "target center" pour tous les niveaux inférieurs
- mémoire "quad tree" stockant l'ensemble de tous les "quad status" du quad tree image.

On a représenté en figure 16 le schéma de principe du circuit mettant en oeuvre la fonction "push" ou la fonction "pop" selon la commande "push/pop" appliquée à un multiplexeur 77. La sortie du multiplexeur 77 est reliée à l'entrée d'un registre78 dont l'entrée de signaux d'horloge reçoit un signal "validation". La sortie du registre 78 est reliée d'une part à une fonction "décision" 79, et d'autre part à une première entrée du multiplexeur 77 par une boucle "pop" 80 comprenant une pile 81 de données adressée par une valeur de niveau. Une sortie de la fonction de décision est reliée par une boucle "push" 82 à la deuxième entrée du multiplexeur 77. Une autre sortie 83 de la fonction 79 fournit diverses variables (voir figures 17 à 19).

Selon les circuits dans lesquels cette fonction "push/pop" est insérée, le registre 78 contient les informations courantes "last c-num", "target center" ou "plan de coupe" utiles au niveau courant. A une commande "push", le registre est sauvé dans une mémoire (pile 81) adressée par la valeur du niveau qui va être quitté, puis la nouvelle valeur du registre est calculée à partir de l'ancienne. A une commande "pop", le registre 78 est chargé par la valeur lue dans la mémoire 81 à l'adresse du niveau qui va être atteint.

La fonction géométrie, représentée en figure 17, réalise l'échantillonnage de l'overlay. Elle est constituée de trois parties identiques pour chacune des trois coordonnées x,y et z.

La sortie d'un multiplexeur 84, commandé par le signal "push/pop", est reliée au registre 85 "target center" (centre de la cible). La sortie du registre 85 est reliée d'une part à une entrée du multiplexeur 84 via une mémoire RAM 86 formant pile de valeurs de "target center", et d'autre part aux entrées de deux additionneurs 87,88 dont les autres entrées sont reliées respectivement aux sorties de mémoires vives 89,90. La mémoire 89 mémorise les valeurs d'offset maximales des coins de la Bbox par rapport au centre de la cible et est adressée par la variable c-num relative à la cible. La mémoire 90 mémorise les valeurs minimales d'offset par rapport au centre de la cible de la Bbox et au centre de l'obel fils, et elle est adressée par le "c-num" de la cible et par le signal "test Bbox".

Le registre 85 contient les coordonnées du centre de l'obel cible courant dans le repère de l'overlay courant. A la sortie des additionneurs, on obtient les coordonnées du centre de l'obel fils dont l'offset est sélectionnée par la variable "c-num", ou les coordonnées des huit coins de sa "Bbox'". Les bits significatifs de poids les plus forts (poids 14,13) des coordonnées de l'obel fils fournissent les numéros d'obel et de node de l'overlay qu'il faut traiter. Les huit adresses obel, node des huit coins d'une Bbox sont calculées en une seule opération, en application de la relation n° 1 citée ci-dessus à propos de l'échantillonnage de l'overlay.

Les sorties des additionneurs 87,88 sont reliées à un circuit combinatoire 91 à trois sorties référencées 92,93,94 et une entrée de commande 95. La sortie de l'additionneur 88 est reliée via un circuit 96 de multiplication par 2 (qui est en fait une élimination par câblage du bit le moins significatif) à la deuxième entrée du multiplexeur 84, à laquelle est également reliée la sortie 94 du circuit 91.

Le nouveau centre de la cible est calculé conformément à la relation n° 2 donnée ci-dessus à propos des coordonnées d'un overlay fils. Le bit de poids 0 du nouveau centre de la cible est toujours nul. Les bits de poids de 1 à 13 sont les anciens bits de poids de 0 à 12, opération réalisée par simple décalage à gauche (c'est-à-dire la multiplication par 2 précitée). Le bit de poids 14 est déterminé en fonction du cas du

EP 0 323 302 B1

nouvel overlay, donc en fonction des anciens bits de poids 12,13,14 selon le tableau suivant :

| anciens bits b 14 : b 13 : b 12 | 000 | 001 | 010 | 011 | 100 | 101 | 110 | 111 |
|---|---|---|---|---|---|---|---|---|
| nouveau bit b 14 | 0 | 0 | 1 | 0 | 1 | 0 | 1 | 1 |

Au cours d'un "push", la commande "assemble" valide les valeurs ("obel", "node") nécessaires au calcul d'un nouvel overlay. En fonction de la position du centre de la cible dans l'ancien overlay, on calcule les huit adresses ("obel", "node"), à raison de deux par axe de coordonnées des huit noeuds de l'ancien overlay, pour former le nouvel overlay, selon le tableau suivant :

| centre du fils b 14 : b 13 : b12 | OBEL 0 | | OBEL 1 | |
|---|---|---|---|---|
| | Obel | Node | Obel | Node |
| 000 | 0 | 0 | 0 | 1 |
| 001 | 0 | 0 | 0 | 1 |
| 010 | 0 | 0 | 0 | 1 |
| 011 | 0 | 1 | 1 | 0 |
| 100 | 0 | 1 | 1 | 0 |
| 101 | 1 | 0 | 1 | 1 |
| 110 | 1 | 0 | 1 | 1 |
| 111 | 1 | 0 | 1 | 1 |

La variable "case" (cas), disponible sur 2 bits à la sortie 92, nécessaire pour la sélection du nouvel overlay (voir ci-dessus description de la figure 9), est la concaténation des variables "obel:node" de l'obel 0.

Le signal de commande "assemble" (sur 1 bit) commande soit l'échantillonnage de l'overlay par la sortie 93 (en test "Bbox" et en fonction "peindre") soit le mode assemblage, via la sortie 92 où est disponible le numéro de cas et à la sortie 94 où on recueille le nouveau bit de poids 14 du centre de la cible.

On a représenté en figure 18 la fonction "next" 75. Elle comporte un multiplexeur 97 à trois entrées dont la sortie est reliée à un registre 98 (mémorisant "c-num", c'est-à-dire un des huit fils de la cible). La sortie 99 du registre 98 est reliée à une première entrée du multiplexeur 97 par une boucle "pop" 100 comportant une pile 101 adressée par les valeurs de "level". La sortie du registre 98 est également reliée à une entrée d'un circuit programmable "next" 102 dont une autre entrée reçoit le signal "quad status" (état de quad tree) provenant du circuit 76. La sortie du circuit 102 est reliée à une autre entrée du multiplexeur 97. En outre, le signal "quad status" est envoyé à un circuit d'initialisation 103 dont la sortie est reliée à la troisième entrée du multiplexeur 97. A une autre sortie 104 du circuit 102, on dispose la variable "n rem", qui est envoyée au séquenceur 68.

Le registre 98 contient le numéro ("c-num") de l'obel fils à visiter. Le circuit 75, lorsqu'il est activé (signal "validation" envoyé sur l'entrée de signaux d'horloge du registre 98), calcule le nouveau "c-num" en fonction du dernier c-num visité et de l'état du signal "quad status" qui invalide les obels fils déjà visités. Si plus aucun fils ne reste à visiter, la variable booléenne "n rem" passe à "faux". La commande "push" initialise la valeur de "c num" en fonction de la valeur de "quad status". La commande "pop" permet de récupérer dans la pile 101 le dernier "c num" qui a été visité au nouveau niveau. Une activation de la fonction "next" valide alors le prochain "c num" à visiter.

Le circuit 73 de détermination de plan de coupe de la figure 19 comporte un multiplexeur 105, commandé par le signal "push"/"pop", dont la sortie est reliée à un registre 106. La sortie du registre 106 est reliée d'une part par une boucle "pop" 107, comportant une pile 108, adressée par "level", à une entrée du multiplexeur 105, d'autre part à une entrée d'un additionneur 109, et enfin à une entrée d'un circuit logique 110 de décision de plan de coupe. La sortie de l'additionneur 109 est reliée à une autre entrée du circuit 110, ainsi qu'à l'autre entrée du multiplexeur 105 via une boucle "push" 111 comportant un multiplieur par deux 112 (décalage à gauche), une sortie 113 du circuit 110 étant également reliée à cette autre entrée du multiplexeur 105. Une mémoire 114 d'offset de plan de coupe, adressée par "c num", est reliée à l'autre entrée de l'additionneur 109. Le circuit 110 compote deux autres sorties (sur 1 bit) 115,116 sur lesquelles sont disponibles les variables "c-pass" et "c-int".

14

Le registre 106 contient la valeur de la distance D′ définie ci-dessus. On obtient à la sortie de l'additionneur 109 la valeur de la distance D′ pour l'obel fils sélectionné par la variable "c-num". La position des obels par rapport au plan de coupe est déterminée par les deux bits formant les variables "cpass" et "cint" : "cpass" est vraie si l'obel fils n'est pas complètement à l'extérieur du plan, et "cint" est vraie si l'obel fils coupe le plan.

La nouvelle valeur introduite dans le registre 106 pour le niveau suivant est la valeur de la distance de l'obel fils sélectionné multipliée par 2, et une décision spécifique est prise par le circuit 110 pour les nouveaux bits 14 et 15 pour stabiliser la décision lorsque le plan ne coupe plus l'obel. Le circuit 110 est programmé selon le tableau ci-dessous.

|  | père b15:b14 | fils b15:b14 | cpass cpass | cint cint | nouveau b15:b14 |  |
|---|---|---|---|---|---|---|
| le plan coupe le père | 00 | 00 | 1 | 1 | 0:b13 | le plan coupe le fils |
|  | 01 | 00 | 1 | 1 | 0:b13 |  |
|  | 01 | 01 | 1 | 0 | 10 | le fils passe à l'intérieur |
|  | 00 | 11 | 0 | 0 | 11 | le fils passe à l'extérieur |
|  | 01 | 11 | 0 | 0 | 11 |  |
| le père est à l'intérieur | 10 | 00 | 1 | 0 | 10 | le fils reste à l'intérieur |
|  | 10 | 01 | 1 | 0 | 10 |  |
|  | 10 | 10 | 1 | 0 | 10 |  |
|  | 10 | 11 | 1 | 0 | 10 |  |
| le père est à l'extérieur | 11 | 00 | 0 | 0 | 11 | le fils reste à l'extérieur |
|  | 11 | 01 | 0 | 0 | 11 |  |
|  | 11 | 10 | 0 | 0 | 11 |  |
|  | 11 | 11 | 0 | 0 | 11 |  |

On a représenté en figure 20 le schéma du circuit 76 à mémoire "quad-tree". Cette mémoire 117 est adressée par les coordonnées "target x", "target y", "target z" des obels cibles et par "level". La mémoire 117 reçoit ses informations d'un registre 118 à quatre bits via un circuit d'écriture 119, et elle est lue par un circuit de lecture 120 qui est relié à un circuit de condensation 121 qui est relié d'autre part à un circuit de test de condensation 122, lui-même relié aux bits du registre 118. Les quatre bits du registre 118 peuvent être positionnés à "1" par un circuit 123 recevant d'une part la variable "c-num" et d' autre part un signal de commande produit par le circuit 157 décrit ci-dessous "upd quad" de mise à jour de quad-tree.

Le registre 118 d'état de quad-tree ("quad status") contient l'état de l'imel courant (peint ou non peint). Ce registre est modifié de deux façon différentes :

- si le niveau est le fond, chaque fois qu'un pixel est peint, le bit le représentant est mis a "1". Au cours d'une opération "pop", une étape de condensation est effectuée. Cette étape consiste à attribuer la valeur "1" (peint) à l'imel dont tous les fils ont été peints.

Au cours d'un "push" on d'un "pop", les anciennes valeurs de "quad status" sont sauvées dans la mémoire 117 à l'ancien niveau et à l'ancienne adresse "target x", "target y", et "quad status" est initialisé par la valeur lue au nouveau niveau et aux nouvelles adresses "target x", "target y". Au cours d'un "pop", il faut de plus effectuer une condensation si l'ancienne valeur du "quad status" est F (F hexadécimal = 1:1:1 : 1 en binaire), c'est-à-dire entièrement peint.

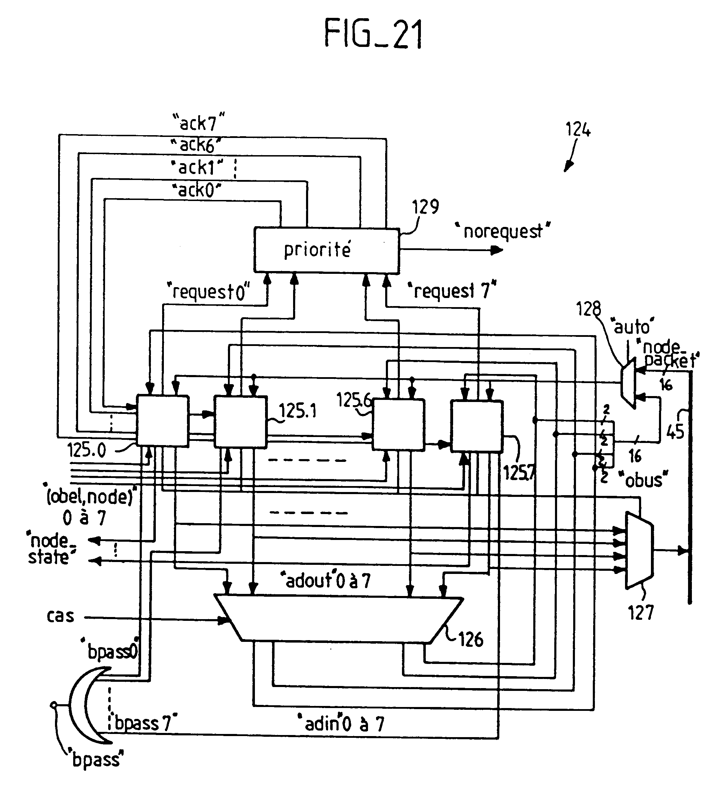

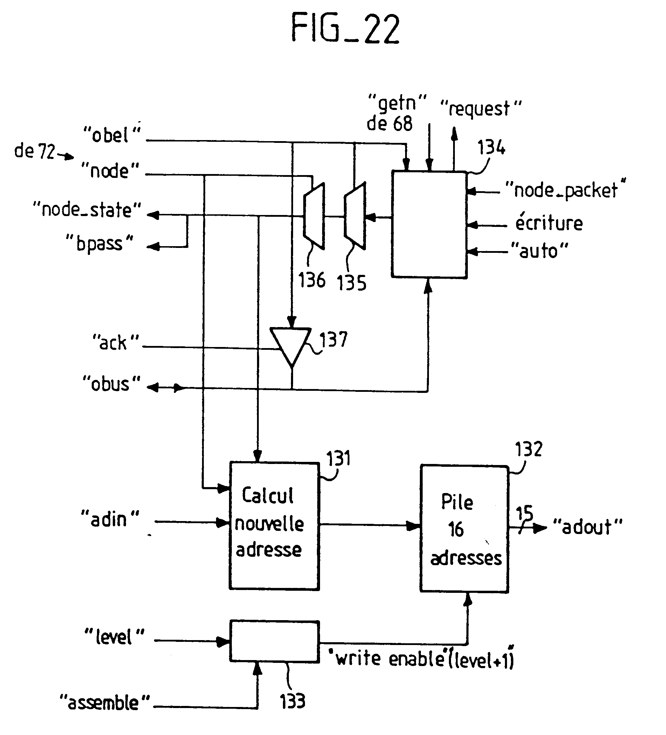

On a représenté en figure 21 une des parties du circuit 71, le circuit 124 d'assemblage d'un overlay. Le circuit 124 comporte huit circuits à portes identiques (décrits en détail ci-dessous en référence à la figure 22) référencés 125.0 à 125.7. Les sorties (signaux "adout") de ces huit portes sont reliées d'une part à un multiplexeur 126 et d'autre part à un multiplexeur 127. Les huit sorties du multiplexeur 126 (signaux "adin") sont reliées aux entrées des circuits à portes 125.0 à 125.7. D'autre part les bits représentant l'information "parent tree" des huit signaux "adin" sont concaténés à l'entrée du multiplexeur 128. La sortie du multiplexeur 127 est reliée au bus de données 45, et il est commandé par la valeur du signal "obus" des portes 125.0 à 125.7 (voir figure 22). Une autre série d'entrées du multiplexeur 128 est reliée aux fils "data" du bus 45. Le multiplexeur 128 est commandé par le signal "auto".

Les sorties "request" des portes 125.0 à 125.7 sont reliées à un circuit de distribution de priorité 129, dont les sorties "ack" 0 à 7 sont reliées à des entrées correspondantes de ces mêmes portes. Ces portes reçoivent par ailleurs les adresses "obel" et "node" variant de 0 à 7 et émettent des signaux "node state"

15

(état des noeuds). Les sorties bpass 0 à bpass 7 de ces portes sont reliées aux entrées d'un circuit OU 130 à la sortie duquel on recueille le signal bpass de la figure 15.

Le multiplexeur 126 est commandé par le signal "case" (numéro de cas, variant de 1 à 27).

La fonction du circuit de la figure 21 consiste à descendre dans l'arbre des overlays. Cette fonction est intimement liée au mode d'adressage de l'octree objet dans la mémoire cache. En effet, on n'assemble dans les mémoires de l'overlay que les adresses auxquelles il faut demander à la mémoire cache les valeurs ou les propriétés des noeuds. Au moment de l'assemblage d'un nouvel overlay, on calcule selon les règles d'adressage de l'octree les adresses de la mémoire cache auxquelles on trouvera les informations sur l'overlay au cas où elles seraient demandées. Les huit circuits de calcul 125.0 à 125.7, tous identiques, ont chacun pour rôle de calculer l'adresse d'un obel du nouvel overlay en fonction de l'ancienne adresse.

On a représenté en figure 22 le schéma fonctionnel d'un des huit circuits de calcul, référencé ici simplement 125. Le circuit 125 comporte un réseau 131 de calcul de nouvelle adresse, décrit en détail en référence à la figure 23, et recevant les données "adin". La sortie du réseau 131 est reliée à une pile 132, pouvant contenir dans le présent exemple 16 adresses calculées par le réseau 131. A la sortie de la pile 132, on recueille les signaux "adout". L'entrée de validation d'écriture de la pile 132 est reliée à la sortie d'un circuit 133 de décodage "4 vers 16", qui reçoit les informations "level" et "assemble" et qui active l'écriture de la pile 132 au niveau "level + 1".

Le circuit 125 comporte en outre un circuit 134 expliqué en détail ci-dessus en référence à la figure 24. Le circuit 134 reçoit les signaux "get n", "node", "packet", "write", "auto", "numéro d'obel" et "obus" et produit sur une sortie le signal "request". Une autre sortie du circuit 134 est reliée à un premier multiplexeur 135, suivi d'un second multiplexeur 136. La sortie du deuxième multiplexeur 136 est reliée à une entrée du circuit 131, et produit d'autre part les signaux "node state" et les "bpass" de 0 à 7.

Les adresses "obel" sont également envoyées à un ensemble 137 de portes à trois états commandées par "ack" et dont les sorties sont relié es à la ligne "obus".

A un niveau donné, chaque circuit 125 délivre l'adresse "adout" des huit obels de l'ancien overlay. En fonction de la variable "case", ces huit adresses sont présentées sur le multiplexeur 126 à l'entrée de chacun de ces circuits 125 de façon que le circuit l25i (i variant de 0 à 7) devant calculer l'adresse de l'obel numéro i reçoive à l'entrée l'adresse de l'obel dans l'ancien overlay dont il fait partie ("adin").

Les huit adresses des huit nouveaux obels sont calculées en parallèle par les huit circuits de calcul tels que le circuit 131, dont un a été représenté en figure 23.

Le circuit 131 comporte quatre multiplexeurs à deux entrées, référencés 138 à 141. Les trois premiers sont commandés par "node state", qui devient la valeur "parent value" pour le signal "adout", et le quatrième (141) est commandé par "parent value" du signal "adin".

Le multiplexeur 138 reçoit à ses entrées les valeurs "tree" et "packet" de "adin" et produit en sortie "tree" de "adout".

Le multiplexeur 139 reçoit à ses entrées "level" et "level + 1" ("level + 1" est obtenue grâce à un transcodeur 142) de "adin" et produit à sa sortie le "level" de "adout".

Le multiplexeur 140 reçoit à ses entrées "packet" de "adin" et "node" depuis le cache et produit à sa sortie le "packet" de "adout".

Le multiplexeur 141 reçoit à ses entrées le "node" de "adin" et le "node" du cache et produit à sa sortie le "node" de "adout".

Le circuit 131 calcule les adresses des huit nouveaux obels de la façon suivante : le circuit 134 calcule la valeur "node state" du noeud dans l'anien overlay. Dans tous les cas, ce "node state" devient le nouveau "parent value" de "adout" (liaison directe, sans passer par des multiplexeurs, entre "node state" et "parent value" de "adout"). Si "node state" est partiel (valeur "P") les multiplexeurs 138 à 140 sont commandés de sorte que leurs secondes entrées (marquées "P") soient activées, ce qui donne (les nouvelles valeurs sont celles de "adout" et les anciennes celles de "adin") :

nouveau "tree" = ancien "packet".

nouveau "level" = ancien "level + 1".

nouveau "packet" = node demandé.

Si "node state" n' est pas partiel, on a :

nouveau "tree" = ancien "tree".

nouveau "level" = ancien "level".

nouveau "packet" = ancien "packet".

Si ancien "parent value" est partiel, le multiplexeur 141 est commandé de telle sorte que l'on a :

nouveau "node" = "node" demandé.

et dans le cas contraire, le multiplexeur 141 est commandé de telle sorte que l'on a :

nouveau "node" = ancien "node".

A l'arrivée d'un signal de commande "assemble" émis par le séquenceur 68, chaque circuit 125 enregistre la nouvelle adresse ainsi calculée dans la pile d'adresses 132 au niveau "level + 1". Après chaque assemblage, une phase automatique valide dans l'overlay les obels dont le père n'est pas partiel. Les huit valeurs des "parent value" sont concaténées pour être présentées à l'entrée des huit circuits 125.0 à 125.7 grâce à un multiplexeur 128, commandé par la variable "auto".

Le circuit 134, détaillé en figure 24, comporte huit registres, référencés 143.0 à 143.7, mémorisant chacun les huit noeuds d'un obel, ce qui fait que leur ensemble mémorise un overlay de huit obels. Chaque "cellule" (mémorisant un noeud) de chacun des registres 143.0 à 143.7 est reliée à la sortie d'un multiplexeur. Les ensembles de huit tels multiplexeurs, correspondant à un registre, sont respectivement référencés 144.0 à 144.7. Pour chacun des registres 143.0 à 143.7, chacun des huit multiplexeurs correspondants a sa première entrée reliée à deux des seize fils respectifs de la sortie du multiplexeur 128 (signal "node-packet"), et chacun de ces multiplexeurs a sa seconde entrée reliée aux deux mêmes fils (pour un même registre) de la sortie du multiplexeur 128 sur lesquels apparaît la valeur "parent value". Tous les multiplexeurs sont commandés par le signal "auto" (produit par le séquenceur 68) qui valide leurs deuxièmes entrées lorsqu'il est vrai. Les 8 sorties des registres 143.0 à 143.7 sont reliées au multiplexeur 135 (voir figure 22).

A chacun des registres 143.0 à 143.7 est associé un circuit combinatoire de validation, respectivement référencé 145.0 à 145.7. Les entrées de chacun de ces circuits combinatoires sont reliées à la ligne "parent value" provenant du multiplexeur 128, à la commande "auto", et à une sortie correspondante d'un circuit 146 de décodage "3 vers 8" validé par un signal "écriture" produit par le séquenceur 68. L'entrée du circuit 146 est reliée au bus trois états "obus". Les sorties (activées en cas d'invalidation) des circuits 145.0 à 145.7 sont reliées à un multiplexeur 147 commandé par la valeur "obel". La sortie du multiplexeur 147 est reliée à une première entrée d'une porte "ET" 148 dont la deuxième entrée est reliée au séquenceur 68 qui lui envoie, selon l'état où il se trouve, l'un des signaux "getn", "Bbox", ou "assemble". A la sortie de la porte 148, on recueille le signal "request", qui est envoyé au circuit de distribution de priorité 129 (voir figure 21).

Chaque circuit 125 peut recevoir (du circuit "géométrie" 72, faisant partie du processeur géométrique 30) une adresse ("obel", "node") dans l'overlay courant. Lorsque l'un des circuits 134 a besoin de faire appel à la mémoire cache pour connaître une valeur, il génère à la sortie "ET" 148 un signal "request". Il peut alors se produire deux processus différents selon le rang du circuit 125 recevant le signal "getn" :

- si le circuit 125.0 reçoit la commande "getn", il renvoie la valeur "node state" au circuit 69 ("test peint") dès que le signal "norequest" produit par le circuit 129 de distribution de priorité est valide, c'est-à-dire dès qu'aucune demande de priorité ne parvient à ce circuit 129.
- si le circuit 125.7 reçoit la commande "getn", il renvoie la valeur "node state" au circuit 70 de génération d'image dès que le signal "norequest" est valide.

Si chacun des circuits 125.0 à 125.7 reçoit un signal "Bbox" (sur la deuxième entrée du "ET" 148), dès que l'un d'eux reconnaît un "node state" différent de "E" (c'est-à-dire égal à "P" ou "F") son circuit 134 envoie via le "OU" 130 au séquenceur 68 une variable "bpass" vraie, ce qui signifie que le test "Bbox" est bon. Mais si toutes les variables "bpass" des huit circuits 125 sont fausses lorsque le signal "norequest" est valide, cela signifie que le test "Bbox" n'est pas bon.

Dès qu'un des circuits 125 envoie un signal "request" au circuit 129, c'est-à-dire dès que dans un des circuits 134 un des circuits 145 valide sa sortie, le circuit 129 (voir figure 21) sélectionne le circuit 125 à servir en validant le signal "ack" correspondant (le circuit 129 peut être réalisé de toute façon connue en soi pour distribuer la priorité lorsqu' il y a plusieurs requêtes simultanées, pour accorder immédiatement la priorité à un demandeur unique, et pour rendre vraie la variable "norequest" tant qu'aucune requête n'est émise). Le circuit 125 en question positionne alors sa variable "obel", via sa porte 137 à trois états sur le bus à trois états "obus" qui sélectionne l'adresse à envoyer sur le bus d'octree via le multiplexeur 127. Lorsque la mémoire cache envoie les données correspondantes en réponse à cette adresse, la variable "node packet" est validée dans l'un des registres 143.0 à 143.7 correspondant à l'information présente sur "obus", et ceci dans tous les circuits 125.0 à 125.7. Enfin, le circuit 125 en question supprime son signal "request".

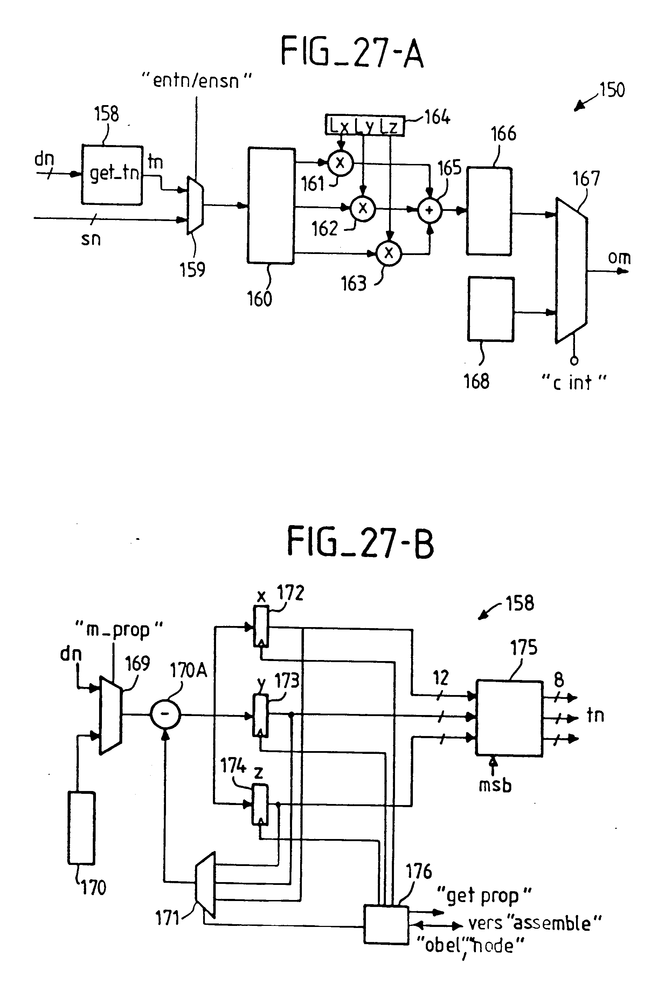

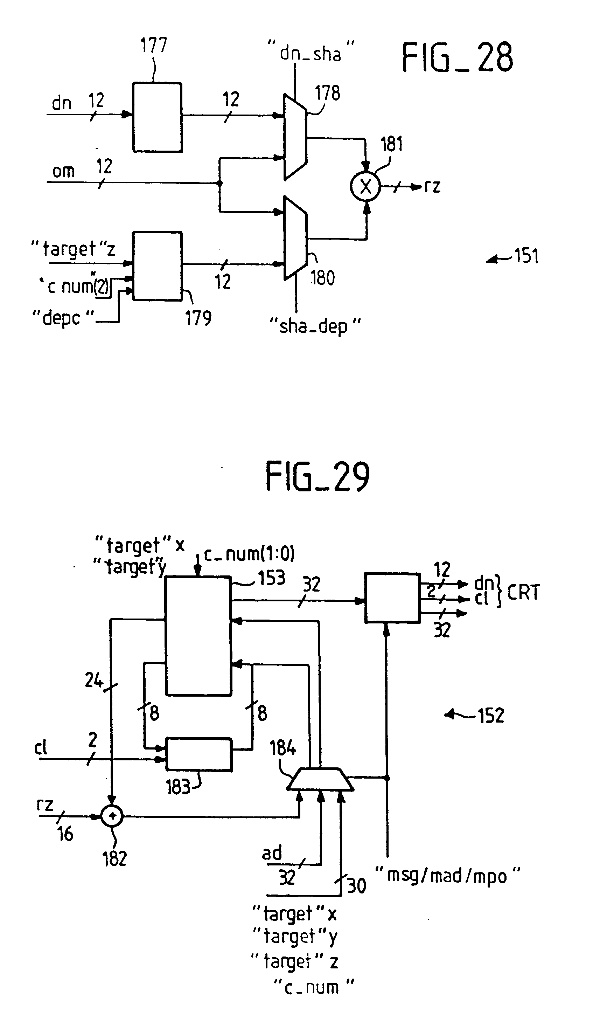

On a représenté en figure 25 le schéma fonctionnel du circuit 70 de génération d'image. Le circuit 70 comporte un circuit 149 dit de "visibilité action" (voir figure 26), un circuit 150 de calcul d'ombrage (voir figures 27A et 27B), un circuit 151 de calcul de résultat (voir figure 28), un circuit 152 d'écriture (voir figure 29) du tampon d'image 153, et un circuit 154 de sélection relié via une mémoire d'image et une interface appropriée au tube image (non représentés).

Lorsque le circuit 69 "test peint" a déterminé qu'il fallait peindre les imels, il envoie au séquenceur 68 un signal "paint". Le séquenceur 68 fait envoyer au circuit 149 via le circuit 71 la valeur correspondante du "node state". Pour décider de la valeur à peindre à envoyer au circuit 153, les circuits 149 à 152 exécutent les fonctions suivantes : lecture de la propriété du noeud à peindre dans la mémoire octree (si la propriété est une densité, les circuits décident si elle doit être retenue), détermination de la nature de l'information à peindre (ombrage ou densité) en fonction de la valeur du noeud, des propriétés de l'objet, de la position de l'objet sur les différents plans de coupe, et du seuillage en densité, puis ces circuits calculent, le cas échéant, l'ombrage, et cumulent les résultats dans la mémoire tampon 153 à l'adresse du pixel à peindre.

Le circuit 149 comporte, comme représenté en figure 26, une mémoire 155 de transcodage de densités recevant la propriété "densité" ("dn" sur 12 bits dans le présent exemple). La mémoire 155 est suivie d'une mémoire 156 de détermination de visibilité, elle-même suivie d'un circuit logique 157 de génération de commandes.

La mémoire 155 permet de sélectionner les densités à retenir en fonction des quatre valeurs possibles ("E", "P'", "F" et "$F_1$" dans le présent exemple) des noeuds.

La mémoire 157 de décision d'action décide de peindre chaque pixel de la façon suivante : si "dv" et "sv" sont nuls, il y a avortement de l'action de peindre le pixel, et le circuit 70 renvoie au séquenceur 68 l'acquittement de son "action" sans avoir peint réellement. Si "dv" est vrai, la densité sera peinte. Si "sv" est vrai, l'ombrage sera peint. Si à la fois "dv" et "sv" sont vrais, la combinaison de la densité et de l'ombrage sera peinte. Ces décisions permettent de sélectionner l'objet à peindre grâce aux bits d'identification "id" (faisant partie des propriétés, et au nombre de quatre dans le présent exemple), de peindre en densité sur un plan de coupe et en ombrage ailleurs, de ne peindre que les noeuds d'une certaine valeur, etc...

Le circuit 156 produit également des informations "c1" permettant de choisir une couleur à peindre (information sur 2 bits dans le présent exemple).

On a représenté en figure 27A le schéma du circuit 150 de calcul d'ombrage. Le circuit 150 comporte un circuit 158, appelé "get tn" de calcul de normale à une surface, et décrit ci-dessous en détail en référence à la figure 27B. Le circuit 158 reçoit une information de densité "dn" (faisant partie des propriétés) et produit en sortie une information "tn" de normale à une surface, qui est envoyée à un multiplexeur 159, recevant sur son autre entrée une information "sn" (faisant également partie des propriétés).

Le multiplexeur 159 est commandé par le signal "en tn"/"en sn" produit par le circuit 157, pour sélectionner le mode de calcul de la normale : "en sn" commande la sélection de la valeur de la normale précalculée dans l'octree objet et donnée par la valeur de "sn" ; "en tn" commande la sélection de la valeur "tn" calculée dans le circuit 158 à partir de la valeur de la densité.

La sortie du multiplexeur 159 est reliée à une mémoire 160 de transcodage permettant de normaliser les valeurs qu'elle reçoit. Ses trois sorties, correspondant aux trois axes de coordonnées, sont reliées à des multiplieurs 161 à 163, qui reçoivent d'autre part de trois mémoires 164 leur fournissant la valeur de la direction de la lumière illuminant l'objet observé (Lx,Ly,Lz) exprimée dans le système de coordonnées de l'objet. Les sorties des trois multiplieurs 161 à 163 sont reliées à un additionneur 165 suivi d'une mémoire de transcodage 166. Les multiplieurs 161 à 163 effectuent le produit scalaire de la valeur de la normale et de la direction de la lumière, et la mémoire 166 effectue une correction permettant d'adapter le résultat fourni par l'additionneur 165, par exemple pour obtenir la valeur absolue du produit scalaire, pour améliorer de façon connue en soi, la qualité du rendu lumineux.

La sortie de la mémoire 166 est reliée à une première entrée d'un multiplexeur 167 dont l'autre entrée est reliée à la sortie d'une mémoire 168 fournissant une valeur précalculée d'ombrage qui est sélectionnée par le multiplexeur 167 si le pixel à peindre est sur un plan de coupe (variable "cint" non nulle).

Le circuit 158, représenté en détail sur la figure 27B comporte un multiplexeur 169 dont une entrée reçoit le signal "dn" de densité, et dont l'autre entrée est reliée à une mémoire 170 fournissant par défaut une valeur précalculée de densité pour chaque valeur E, P, F, F1 des noeuds n'ayant pas la propriété "densité" dans l'octree. Le multiplexeur 179 est commandé par la variable "m-prop" fournie par le contrôleur 176.

La sortie du multiplexeur 169 est reliée à une entrée d'un soustracteur 170A dont l'autre entrée est reliée à la sortie d'un multiplexeur 171. La sortie du soustracteur 170A est reliée aux entrées de trois registres 172 à 174 affectés respectivement aux trois composantes x,y et z des noeuds des overlays. Les sorties des registres 172 à 174 sont reliées à un registre à décalage 175. Dans le présent exemple, les sorties des registres 172 à 174 sont à 12 bits, et le circuit 175 en effectue la normalisation globale sur 8 bits. Les entrées de signaux de validation des registres 172 à 174 sont reliées à un circuit de commande 176 commandant également le multiplexeur 171. Le circuit de commande 176 produit le signal "get prop" et échange avec le circuit 71 les valeurs ("obel", "node").

Le circuit 158 calcule une normale dans le repère de l'overlay courant en échantillonnant six points autour du noeud courant (xo, yo, zo) et en effectuant trois différences. Si on repère un noeud de l'overlay par trois composantes x,y,z, variant de 0 à 3, les trois différences pour ces composantes sont calculées de la manière suivante : pour l'axe 0x en appelant diff(x) la composante de la différence des densités selon l'axe 0x :

- pour xo = 1 ou 2 : diff(x) = (densité (xo + 1)-densité (xo-1))/2
- pour xo = 0 : diff(x) = densité(1) - densité (0)
- pour xo = 3 : diff(x) = densité(3) - densité(2).

On procède de la même façon pour diff(y) et diff(z). Chaque point (x,y,z) à échantillonner dans l'overlay est directement codé en ("obel", "node").

Le circuit 151 de calcul de résultat comporte une mémoire 177 de transcodage d'atténuation qui corrige la valeur de la densité "dn" à projeter (nécessaire par exemple dans le cas de la synthèse de radiographie), dont la sortie est reliée à une entrée d'un multiplexeur 178 dont l'autre entrée reçoit la valeur de om" (ombrage) et qui est commandé par "dn sha" issu du circuit 157. Le circuit 151 comporte en outre une autre mémoire de transcodage 179 recevant la valeur "target z", le bit le plus significatif de la variable "c num", et commandée par la variable "dep c" (produite par 157), est reliée à une entrée d'un multiplexeur 180 recevant sur son autre entrée la valeur "om" et commandé par le signal "sha dep" issu du circuit 157. Les sorties des multiplexeurs 178,180 sont reliées à un multiplieur 181 dont le signal de sortie est appelé "rz", et envoyé au circuit 152. La mémoire 179 permet de calculer un coefficient de profondeur soit pour la densité (provenant de 177), soit pour l'ombrage.

En fonction des valeurs de "dv" et "sv" envoyées au circuit 157 et produisant les commandes "sha dep" et "dn sha", la valeur "rz" à la sortie du multiplieur 181 est :
- soit le produit de la densité corrigée par le coefficient de profondeur
- soit le produit de l'ombrage par le coefficient de profondeur
- soit le produit de la densité par l'ombrage.

Le tampon d'image 153 est associé à un circuit d'écriture 152 comportant un additionneur 182 relié à la sortie du circuit 151 (signal "rz") et à une sortie (sur 24 bits) du tampon 53. La sortie de l'additionneur 182 est reliée à une entrée d'un multiplexeur 184 dont les deux autres entrées reçoivent respectivement la propriété "ad" et les adresses "target x", "target y", "target z", ainsi que "c num". Le multiplexeur 184 est commandé par l'un des paramètres de commande "msg", mad" ou "mpo". Lorsque "msg" est vrai (mode sommation), les 24 bits de poids faibles de chaque pixel mémorisés dans le tampon 153 contiennent le résultat de la somme des signaux "rz", et les huit bits de poids forts contiennent le résultat de la concaténation des signaux "c1".

Lorsque "mad" est vrai (mode adresse), les 32 bits de chaque pixel contiennent l'adresse en mémoire d'octree de l'obel projeté exprimé par ("numéro de noeud dans le paquet", "numéro de paquet dans le bloc", "adresse du bloc").

Lorsque "mpo" est vrai (mode position), les 32 bits de chaque pixel contiennent les coordonnées ("target z", "target y", "target x") de l'obel projeté (trois champs de 10 bits).

Le tampon 153 est adressé par "target x", "target y" et les deux bits de poids faibles de "c num" (référencés "c-num(o)" et "c-num(1)").

Dans le mode de fonctionnement courant, "msg" est vrai, et le processeur géométrique cumule le résultat calculé dans le tampon 153 à l'adresse "target x", target y". Dans les conditions courantes, le processeur cumule donc quatre résultats à la même adresse, ce qui crée un effet "antialiasing" (lissage) sur l'image. Il est possible de supprimer cet effet antialiasing en écrivant le résultat à l'adresse ("target x" : "c-num(o)"), ("target y" : "c-num(1)") qui correspond à l'adresse du pixel peint au niveau suivant ("level + 1").

Dans le cas où l'on inactive le masquage des obels projetés par le quad-tree, on obtient dans le tampon 153 l'image cumulée de toutes les projections de l'objet dans la direction concernée.

Les 12 bits les plus significatifs (sur toute l'image) sont envoyés au système de visualisation d'image (relié à la sortie de 154) à la fin de la génération de l'image.

Les couleurs sélectionnées sont composées, sur 8 bits par exemple, dans le tampon 153. Deux bits résultants sont envoyés au système de visualisation d'image à la fin de la génération de l'image.

Dans le cas des modes de fonctionnement "mad" et "mpo" les 32 bits du tampon 153 sont envoyés à un système de traitement pour générer des fonctions de repérage ou de mesure 3D par exemple.

Les circuits décrits ci-dessus permettent de mettre en oeuvre un grand nombre d'applications grâce aux combinaisons des différentes façons de créer une image et de positionner l'objet, réalisées par les différents modes de fonctionnement du processeur géométrique et en particulier par la mémoire 156 (figure 26).

Les trois principaux modes de fonctionnement du processeur géométrique sont : le mode adresse, le mode position et le mode sommation. En outre, on peut distinguer dans le mode sommation, le mode non transparent et le mode transparent.

- Mode adresse (variable "mad" vraie). Dans ce mode, l'image générée est une matrice d'adresses absolues en mémoire d'octree des obels de l'octree de l'objet vu. Ces adresses sont décrites sous la forme : ("adresse absolue du paquet de noeuds père en bloc auquel appartient le noeud vu", "numéro de paquet dans ce bloc", "numéro de noeud dans ce paquet"). En pointant un pixel de l'écran, il est possible de repérer un obel dans la mémoire d'octree, par exemple pour en modifier les caractéristiques.
- Mode position (variable "mpo" vraie). Dans ce mode, l'image générée est une matrice de positions (x,y,z) dans le repère objet des obels vus. En pointant l'écran, il est possible d'effectuer des mesures dans l'espace d'un objet.
- Mode sommation (variable "msg" vraie). C'est le mode standard de fonctionnement du processeur. On peut y distinguer deux sous-modes :
  - mode non transparent : chaque pixel peint marque la mémoire quadtree, ce qui a pour effet de cacher les parties non vues de l'objet (les obels sont explorés de l'avant vers l'arrière).
  - mode transparent : les pixels peints ne modifient pas la mémoire quadtree. C'est donc l'état initial de la mémoire quadtree qui contrôle la possibilité de peindre ou non les pixels. En particulier, si le quadtree est entièrement nul, on obtient le cumul des images vues dans la direction de la projection (sur l'écran).

En plus de ces modes, lorsque des visualisations en ombrages sont programmées, il faut indiquer au processeur si l'ombrage doit être calculé au vol à partir de la densité, ou s'il faut utiliser l'ombrage précalculé.

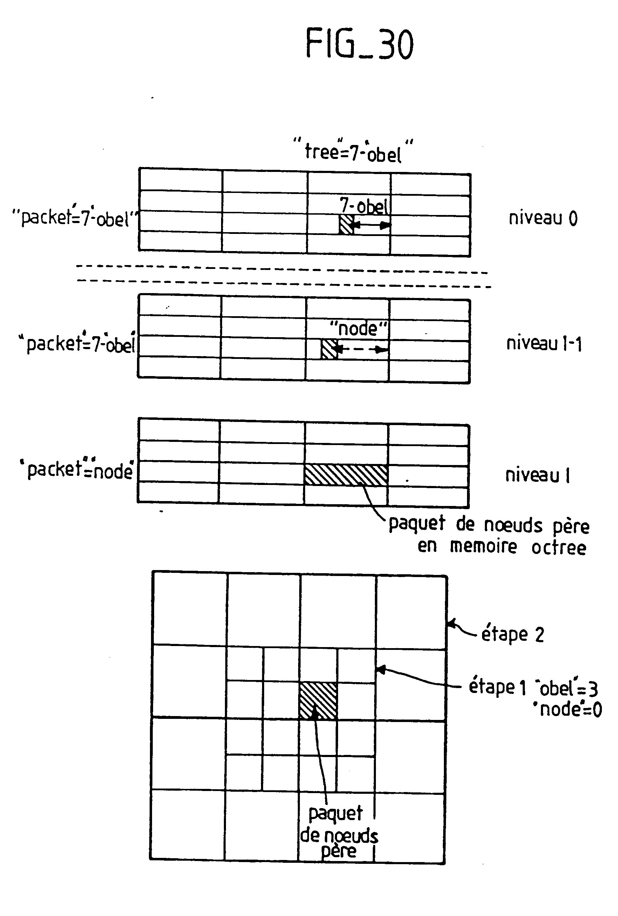

On va maintenant décrire l'initialisation du processeur, et en référence à la figure 30 l'initialisation de la mémoire cache.

L'initialisation du processeur doit déterminer : les premiers niveaux du cache jusqu'au noeud père de l'octree en mémoire d'octree, les registres d'état du processeur géométrique au niveau 0 ("target center" et adresse en mémoire cache de l'overlay au niveau 0), et les paramètres géométriques de fonctionnement : "child offset", "Bbox offset", et "cut offset" (offset de $D'$ sur la figure 10).

Le mode de fonctionnement du processeur géométrique exige de résoudre deux problèmes pour effectuer l'initialisation : exprimer les coordonnées d'un point de la cible dans le repère objet, et définir l'overlay initial de façon que la cible respecte les règles d'inclusion dans l'overlay.

Considérons l'objet tel qu'il est défini dans la mémoire d'octree, et positionné par rapport à la cible. Soient x,y,z les coordonnées d'un point de la cible dans le repère cible. Soient X,Y,Z les coordonnées du même point dans le repère objet. Tant que la règle d'inclusion n'est pas respectée, les valeurs X,Y,Z peuvent sortir de l'intervalle $(0,7FFF_h)$. Soient 0x,0y et 0z les coordonnées de l'origine du repère objet dans la cible. Soient R la rotation et h l'homothétie subies par l'objet depuis la position initiale qu'il a lorsqu'il est confondu avec la cible. On a alors :

$$\begin{bmatrix} x \\ y \\ z \end{bmatrix} = h.R. \begin{bmatrix} x \\ y \\ z \end{bmatrix} + \begin{bmatrix} ox \\ oy \\ oz \end{bmatrix}$$

soit :

$$\begin{bmatrix} x \\ y \\ z \end{bmatrix} = 1/h.R \left\{ \begin{bmatrix} x \\ y \\ z \end{bmatrix} - \begin{bmatrix} ox \\ oy \\ oz \end{bmatrix} \right\}$$

Les étapes suivantes ont pour but d'assurer le respect des règles d'inclusion.

- Première étape : ajout de deux niveaux. On définit dans cette première étape un overlay tel que l'overlay initial, indivisible et représenté par le paquet de noeuds père de l'octree en mémoire, devienne un des 64 obels du nouvel overlay, tous les autres obels étant vides.

Le niveau 0 devient formé de 7 obels vides, et un obel numéro "obel" dont le fils, de numéro "node", est le paquet de noeuds père de l'octree en mémoire d'octree.

L'adresse ("obel", "node") est déterminée de façon que le centre de la cible ("target center") soit le plus près possible du centre du nouvel overlay.

On effectue donc les transformations suivantes sur chacune des coordonnées X,Y et Z de tous les points définis dans l'overlay :

- si "target center" est inférieur ou égal à $-4000_h$,

  "obel" = 1

  "node" = 1

  $X = X/4 + 6000_h$

- si "target center" est supérieur ou égal à $-3FFF_h$ et inférieur ou égal à $3FFF_h$, on a

  "obel" = 1

  "node" = 1

  $X = X/4 + 4000_h$

- si "target center" est supérieur ou égal à $4000_h$ et inférieur ou égal à $BFFF_h$, on a

  "obel" = 0

  "node" = 1

  $X = X/4 + 2000_h$

- et si "target center" est supérieur ou égal à $C000_h$, on a

  "obel" = 0

  "node" = 0

  $X = X/4$

Deuxième étape : ajout d'un niveau tant que la cible n'est pas incluse dans l'overlay. Si les règles d'inclusion ne sont pas vérifiées à ce niveau, soit parce qu'une partie de la cible est à l'extérieur de l'overlay, soit parce que la cible est trop grande, on ajoute un niveau a l'overlay de façon concentrique. Tant que la règle d'inclusion n'est pas vérifiée, on effectue la transformation :

$$X = X/2 + 2000_h$$

Parmi plusieurs solutions possibles pour initialiser la mémoire cache, on en décrit une ci-dessous en référence à la figure 30. Cette solution permet de retrouver une structure d'initialisation répétitive quel que soit le nombre de niveaux ajoutés. On suppose, dans l'exemple de la figure 30, que le paquet de noeuds père a été positionné dans la première étape dans l'obel numéro "obel" et dans le noeud numéro "node".

La première étape initialise deux niveaux, et chaque étape suivante initialise alors un niveau supplémentaire.

Le niveau 1 du paquet de noeuds père de l'octree en mémoire d'octree sera donc égal à 1 si seule la première étape est effectuée, et sera incrémenté de 1 pour chaque seconde étape effectuée ensuite.

Il convient de valider les informations inscrites jusqu'au niveau 1, et changer l'adresse absolue du fils du paquet de noeuds père dans la mémoire cache des adresses. Après cette étape, il faut initialiser l'overlay du processeur géométrique de façon que l'obel numéro "obel" ait un père partiel et connaisse l'adresse cache ("tree" = "7-obel", "packet" = "7-obel" pour l'exemple de la figure 30) du bloc le décrivant.

**Revendications**

1. Procédé dé visualisation en trois dimensions d'objets (2,3) codés numériquement sous forme d'octree (C0, C6, C00, C11), l'octree étant emmagasinée dans une mémoire d'octree selon une structure arborescente (4, 5, 7', 7", 8) obtenue, à chaque niveau, par division par deux selon chaque axe de coordonnées Ox, Oy, Oz, des dimensions de l'univers objet ou de ses sous-univers l'univers objet étant un cube (1) renfermant toute l'information à représenter, caractérisé par le fait qu'à partir de l'univers objet on ne génère que la partie utile d'un autre octree cible dans un univers cible, l'univers cible étant un hexaèdre dont les axes de coordonnées Ox', Oy' forment un plan parallèle à un écran de visualisation (14).

2. Procédé selon la revendication 1, caractérisé par le fait qu'à partir dudit autre "octree", on forme un "univers cible" (12) qui est entièrement inclus dans l'"overlay" (11) de l'objet, l'"overlay" étant un ensemble de huit "obels" comprenant l'"obel" de l'objet et formant un cube, ces huit "obels" ne partageant pas obligatoirement le même "père" dans l'"octree" d'origine, l'univers cible étant tel que le plan formé par ses axes ("Ox,Oy") soit parallèle au plan de l'écran.

3. Procédé selon la revendication 1, caractérisé par le fait que pour déterminer si un obel de l'octree cible est un obel feuille (s'il est au dernier niveau de l'octree cible) ou non, on effectue un test en déterminant les valeurs des huit coins d'un parallélépipède rectangle dont les côtés sont respectivement parallèles aux axes de l'overlay de l'objet et dont les arêtes passent par les sommets de l'obel cible, la valeur de l'obel cible étant "vide" si les valeurs d'échantillonnage de l'overlay aux huit coins du parallélépipède sont "vides" et "partielle" dans le cas contraire, ce, à condition que la taille, dans toutes ses dimensions, du parallélépipède n'excède pas la taille des obels de l'overlay.

4. Procédé selon la revendication 3, caractérisé par le fait que pour établir une relation géométrique entre les overlays de l'objet et l'octree cible, on contrôle concurremment les parcours des overlays dans l'objet et le parcours dans l'octree cible de façon que les niveaux y soient identiques à tout moment et qu'à tout niveau l'obel cible soit entièrement inclus dans l'overlay objet.

5. Procédé selon la revendication 4, caractérisé par le fait que la sélection de l'overlay d'un obel fils se fait à partir de la position de son centre dans l'overlay.

6. Procédé selon la revendication 5, caractérisé par le fait que pour ladite sélection d'overlay on choisit l'overlay dont le centre est le plus proche du centre de l'obel fils.

7. Procédé selon l'une des revendications 1 à 6, pour représenter des coupes d'objets selon un plan de coupe, caractérisé par le fait que pour décider si un fils de l'obel cible courant est entièrement d'un côté ou l'autre du plan de coupe on est coupé par ce plan, on compare la distance de coins des obels cibles fils au plan de coupe à la distance du coin de leur obel père le plus éloigné de ce plan de coupe, dans le demi-espace délimité par ce plan et à visualiser (figure 10).

8. Procédé selon l'une des revendications 1 à 7, caractérisé par le fait que l'octree cible est parcouru en donnant la priorité aux obels les plus proches de l'écran de visualisation.

**Claims**

1. Method for displaying three-dimensional objects (2,3) digitally encoded in octree fashion (C0,C6,C00,C11) the octree being stored in an octree memory in accordance with a tree-like structure (4,5,7',7'',8) obtained at each level by dividing dimensions of the object universe or of its sub-universes by two, along each axis of coordinates Ox, Oy, Ox, the object universe being a cube (1) enclosing all the information to be displayed, characterized in that from the object universe only the useful part of another target octree in a target universe is generated, the target universe being a hexahedron of which the axes of coordinates Ox', Oy', form a plane parallel to a display screen (14).

2. Process according to Claims 1, characterized in that from the said other "octree" a "target universe" (12) is formed which is completely included in the overlay (11) of the object, the overlay being an assembly of eight "obels" comprising the "obel" of the object and forming a cube, these eight "obels" not necessarily sharing the same "father" in the original octree, the target universe being such that the plane formed by its axes ("Ox, Oy") is parallel to the plane of the screen.

3. Process according to Claim 1, characterized in that in order to determine whether or not an obel of the target octree is a leaf obel (whether it is on the last level of the target octree) a test is performed to determine the values of the eight corners of a rectangular parallelopiped of which the sides are parallel to the respective axes of the overlay of the object and of which the edges pass through the peaks of the target obel, the value of the target obel being "vacant" if the sampling values of the overlay at the eight corners of the parallelopiped are "vacant" and "partial" if this is not the case, provided the size of the parallelopiped, as regards all its dimensions, does not exceed the size of the obels of the overlay.

4. Process according to Claim 3, characterized in that in order to establish a geometrical relationship between the overlays of the object and the target octree the course followed by the overlays of the object and the course in the target octree are verified concurrently so that the levels will be identical at every moment and that at every level the target obel will be completely included in the object overlay.

5. Process according to Claim 4, characterized in that the selection of the overlay of a "son" obel is effected with its position of its centre in overlay as the starting point.

6. Process according to Claim 5, characterized in that for the said overlay selection that overlay is selected of which the centre is nearest to the centre of the "son" obel.

7. Process according to one of Claims 1-6, for displaying sections of objects in accordance with sectional plane, characterized in that to decide whether a "son" of the current target obel is entirely on one side or on the other side of the sectional plane ore cut by this plane the distance of the corners of the "son" target obels to the sectional plane is compared with the maximum distance of the corner of their "father" obel from the said sectional plane in the half-space delimited by this plane and to be displayed (Fig. 10).

8. Process according to one of Claims 1-7, characterized in that the target octree is traversed by allocating priority to the obels nearest to the display screen.

**Patentansprüche**

1. Verfahren zur dreidimensionalen Darstellung von in Octreeform (C0, C6, C00 und C11) digital codierten Objekten (2 und 3), wobei der Octree in einem Octreespeicher gemäß einer Baumstruktur (4, 5, 7', 7" und 8) gespeichert ist, die bei jedem Niveau durch Teilung durch zwei bei jeder Achse der Koordinate Ox, Oy und Oz der Dimension des Objektuniversums oder dessen Unterobjektuniversen erhalten wird, wobei das Objektuniversum ein Würfel (1) ist, das alle darzustellende Information enthält, dadurch gekennzeichnet, daß ausgehend vom Objektuniversum man nur den Nutzteil eines anderen Ziel-Octree in einem Zieluniversum erzeugt, wobei das Zieluniversum ein Hexaeder ist, dessen Koordinatenachse Ox' und Oy' eine Ebene bilden, die zu einem Darstellungsbildschirm (14) parallel liegt.

2. Verfahren nach Anspruch 1, dadurch gekennzeichnet, daß ausgehend von dem anderen "Octree" man ein "Zieluniversum" (12) bildet, das zur Gänze im "Overlay" (11) des Objekts eingeschlossen ist, wobei das "Overlay" eine Zusammenstellung von acht das "Obel" des Objekts umfassenden, einen Quader bildenden "Obel" ist, wobei diese "Obel" nicht unbedingt am "Vater" im "Octree" des Ursprungs teilnehmen, und wobei das Zieluniversum so geartet ist, daß die durch seine Achsen ("Ox und Oy") gebildete Ebene zur Ebene des Schirmes parallel liegt.

3. Verfahren nach Anspruch 1, dadurch gekennzeichnet, daß, um festzustellen ob ein Obel des Ziel-Octree ein Bogen-Octree (wenn es im letzten Niveau des Ziel-Octree ist) oder nicht, man einen Test durchführt, bei dem man die Werte von acht Ecken eines Quaders mißt, dessen Seiten zu den Achse des Overlay des Objekts parallel sind und dessen Kanten sich durch die Spitzen des Ziel-Octree erstrecken, wobei der Wert des Ziel-Octree "leer" ist, wenn die Maßstabwerte des Overlay an den acht Ecken des Quaders "leer" oder im anderen Fall "unvollständig" sind, vorausgesetzt, daß der Quaderschnitt in allen Dimensionen dem Schnitt der Obel des Overlay nicht übersteigt.

4. Verfahren nach Anspruch 3, dadurch gekennzeichnet, daß, um eine geometrische Relation zwischen den Overlay des Objekts und dem Ziel-Octree aufzustellen, man gleichzeitig die Bahnen der Overlay im Objekt und die Bahn im Ziel-Octree kontrolliert, so daß die dort vorhandenen Niveaus in jedem Zeitpunkt identisch sind und bei jedem Niveau das Ziel-Obel zur Gänze im Objekt-Overlay enthalten ist.

5. Verfahren nach Anspruch 4, dadurch gekennzeichnet, daß die Auswahl des Overlay eines Sohn-Obel ausgehend von der Lage seines Mittelpunktes im Overlay durchgeführt wird.

6. Verfahren nach Anspruch 5, dadurch gekennzeichnet, daß für die Auswahl des Overlay das Overlay gewählt wird, dessen Mittelpunkt dem Sohn-Obel am nächsten liegt.

7. Verfahren nach einem der vorhergehenden Ansprüche 1 bis 6 zur Darstellung von Schnitten von Objekten gemäß einer Schnittebene, dadurch gekennzeichnet, daß für die Entscheidung, ob ein Sohn des laufenden Ziel-Obel ganz an der einen oder der anderen Seite der Ebene des Schnittes, man die Entfernung der Ecken der des Sohn-Ziel-Obel in der Schnittebene bei der Entfernung der Ecke ihres Vater-Obel, das am weitesten entfernt von dieser Schnittebene liegt, erfaßt, und zwar in einem Halbraum, der durch diese darzustellende Eben begrenzt ist (Figur 10).

8. Verfahren nach einem der vorhergehenden Ansprüche 1 bis 7, dadurch gekennzeichnet, daß das Ziel-Octree abgefahren wird, wobei denjenigen Obel das Vorrecht gewährt wird, die dem Darstellungsbildschirm am nächsten liegen.

FIG_1

FIG_2

FIG_3

FIG_3-A

FIG_4

FIG_5

cas 1

cas (1,2)

cas 2

7FFF

FIG_6

x'
x'
X'
7FFF      cas 0
7FFF      cas 1
7FFF      cas 2
d
d
X'
X'

FIG_7

FIG_8

'imel' 1
'imel' 0

min   max

27

# FIG_9

cas 0    cas 1    cas 2

000 001 010 011 100 101 110 111    position du centre
                                   de la cible dans l'ancien
                                   "overlay"

cas 0 ├──┼──┼──┤

cas 1    ├──┼──┼──┤          } nouvel "overlay"

cas 2       ├──┼──┼──┼──┤

# FIG_10

22          23

26

0<D'<4000

24    D

D'>4000    20

21    27

L=7FFF

"Cut offset"

EP 0 323 302 B1

FIG_12

## FIG_11

## FIG_13

"tree"

"level-1"

aller chercher le bloc
fils du paquet de noeud
parent s il n'est pas
valide

56

"level"
"packet"

envoyer le paquet de
noeuds sur le bus
octree

57

58

"level+1"

valider le pointeur
parent et invalider
le bloc si nécessaire

# FIG_14

"parent_tree(tree), level-1, tree)"

aller chercher le bloc fils
du paquet de nœuds
(parent(tree), level-1, tree)

le stocker a l'adresse
"(tree, level)" et le valider

invalider les blocs qui
pointent sur un paquet
de nœuds du bloc(tree, level)

# FIG_15

EP 0 323 302 B1

FIG_16

FIG_17

32

# FIG_18

"level"

pile
lastc_num

101

3

100

75

"c_num"

97

pop
push
next

98

99

"c_num"

3

validation

"push", "pop"
ou "next"

"n_rem" 104

102

"next"

4

"quad_status"

initialisation

103

## FIG_19

## FIG_20

# FIG_21

124

"ack7"
"ack6"
"ack1"
"ack0"

129

priorité

"norequest"

"request0"

"request 7"

128

"auto"

"node_packet"

16

125.1

125.6

125.0

125.7

2
2
2
2
2

16

16

45

"obus"

"(obel,node)" 0 à 7

"node_state"

"adout" 0 à 7

127

cas

126

"bpass0"

"bpass 7"

"adin" 0 à 7

"bpass"

# FIG_22

## FIG_23

"node"

"node_state"

"parent_value"

"parent_value"

2

"tree" — 138 — "tree"

"level" — 139 — "level"

+1

"packet" — 140 — "packet"

142

"adin"

"node" — 141 — "node"

"adout"

## FIG_24

"auto"

145.0

16

2 2 2 2 2

+2 +2 +2 +2 — "parent_value"

144.0

"obel" 0 — 143.0

"node_packet"

128

16

145.7

16

2

"parent_value"

144.7

"obel" 7 — 143.7

134

146

écriture

3 "obus"

"obel"

8 (node_packet)

147

"getn"

"bbox"

"assemble"

de 68

148

"request"

## FIG_25

## FIG_26

# FIG_27-A

"entn/ensn"

158

dn → get_tn → tn

sn

159

160

Lx Ly Lz — 164

161 (x)

162 (x)

163 (x)

165 (+)

166

167

om

168

"c int "

150

# FIG_27-B

"m_prop"

dn

169

170A

170

171

x 172

y 173

174 z

12

175

8

tn

msb

176

"get prop "

vers "assemble"

"obel""node"

158

FIG_28

177

dn $\underline{12}$ → [ ] $\underline{12}$ → 178

"dn_sha"

om $\underline{12}$

"target"z → [ ] $\underline{12}$ → 180
"c num(2)" →
"depc" → 179

181
⊗ → rz

←151

"sha_dep"

FIG_29

"target"x
"target"y   c_num(1:0)

153   $\underline{32}$ → [ ]   $\underline{12}$ → dn}
                                $\underline{2}$ → cl} CRT
24                              $\underline{32}$

8      8

cl $\underline{2}$ → [ ]
           183

184
←152

rz
$\underline{16}$ + 182

ad
$\underline{32}$   $\underline{30}$   "msg/mad/mpo"

"target"x
"target"y
"target" z
"c_num"

# FIG_30

"tree"=7-obel"

"packet=7-obel"                    7-obel          niveau 0

"packet=7-obel"                    "node"          niveau 1-1

"packet=node"                                      niveau 1

paquet de nœuds père
en memoire octree

étape 2

étape 1 "obel"=3
"node"=0

paquet
de nœuds
père